# EUROPÄISCHE PATENTSCHRIFT

(11) **EP 4 100 472 B1**
(45) Veröffentlichungstag und Bekanntmachung des Hinweises auf die Patenterteilung: **01.07.2026**
(21) Anmeldenummer: 21701707.8
(22) Anmeldetag: 20.01.2021
(51) Int. Cl.: C08L 83/04, C09D 183/04, C09J 183/04

(54) **SCHNELL HÄRTENDE ZWEIKOMPONENTIGE SILICONZUSAMMENSETZUNG MIT EINSTELLBARER TOPFZEIT**
RAPID CURING TWO-COMPONENT SILICONE COMPOSITION WITH ADJUSTABLE POT LIFE
COMPOSITION DE SILICONE À DEUX COMPOSANTS À DURCISSEMENT RAPIDE À CONSERVATION EN POT RÉGLABLE

(30) Priorität: 03.02.2020 EP 20155227
(43) Veröffentlichungstag der Anmeldung: 14.12.2022
(73) Patentinhaber: Sika Technology AG, 6340 Baar (CH)
(72) Erfinder: SCHLUMPF, Michael, 8143 Stallikon (CH); SUTER, Riccardo, 5400 Baden (CH); JAKOB, Samuel, 8953 Dietikon (CH)
(74) Vertreter: Sika Patent Attorneys
(86) Internationale Anmeldenummer: PCT/EP2021/051176
(87) Internationale Veröffentlichungsnummer: WO 2021/156055

(56) Entgegenhaltungen:
- DE-A1- 19 832 686
- DE-A1- 19 832 688
- DE-T2- 3 889 035
- US-A1- 2010 081 751
- US-A1- 2015 240 057
- DATABASE WPI Week 201920, Derwent World Patents Index; AN 2019-05638A, XP002799898
- DATABASE WPI Week 201748, Derwent World Patents Index; AN 2017-37329W, XP002799899

## Beschreibung

### Technisches Gebiet

Die vorliegende Erfindung betrifft das Gebiet der zweikomponentigen Siliconzusammensetzungen.

### Stand der Technik

Zweikomponentige Siliconzusammensetzungen sind schon seit längerem bekannt und werden insbesondere als Kleb- und Dichtstoffe in unterschiedlichen Anwendungen eingesetzt. Weit verbreitet sind insbesondere bei Raumtemperatur vernetzende, zweikomponentige Siliconzusammensetzungen, auch bekannt als RTV-2 Silicone (RTV-2: "room temperature vulcanizing, 2-part silicones").

Eine derartige zweikomponentige Siliconzusammensetzung ist beispielsweise beschrieben in EP 0 787 766 A1. Eine weitere zweikomponentige Siliconzusammensetzung ist beschrieben in US 2015/240057 A1. Um die Lagerstabilität in diesen zwei Dokumenten beschriebenen Zusammensetzungen nicht zu beeinträchtigen bzw. um eine zu frühe, ungewollte Aushärtung zu verhindern, werden die Hauptbestandteile, nämlich ein α,ω-Dihydroxypolydiorganosiloxan und ein Katalysator sowie Vernetzer für die Vernetzung von Polydiorganosiloxanen, in zwei separaten Komponenten aufbewahrt. Bei der Applikation einer derartigen Zusammensetzung werden dann die beiden Komponenten in einem vorgesehenen Gewichts- oder Volumenverhältnis miteinander vermischt, worauf es zur Vernetzung bzw. zur Aushärtung der Zusammensetzung kommt. Die Zeit, während der die Mischung noch verarbeitbar und applizierbar ist bevor die Aushärtung zu weit fortgeschritten ist, wird als Topfzeit bezeichnet.

Ein bedeutender Nachteil derartiger zweikomponentiger Siliconzusammensetzungen, wie sie in EP 0 787 766 A1 oder US 2015/240057 A1 beschrieben sind, ist die Konstanz der Topfzeit. Diese wird durch die Formulierung der zweikomponentigen Siliconzusammensetzung bestimmt, vor allem jedoch über die Art und Menge an enthaltenen Reaktivsubstanzen wie Vernetzer und über die Menge des Katalysators. Dabei können üblicherweise zweikomponentige Siliconzusammensetzungen mit kurzer Topfzeit und schneller Aushärtung, oder aber langer Topfzeit und langsamer Aushärtung erreicht werden. Alle diese Zusammensetzungen weisen zudem ein typisches Aushärteverhalten auf, das mit einer langsamen oder schnellen, aber von Anfang an stetigen Vernetzung und damit Viskositätszunahme nach Mischen der Komponenten einhergeht. Dies ist vor allem in der industriellen Fertigung ein Problem. Dort wäre eine auf den Prozess zugeschnittene Topfzeit ohne Wartephasen gewünscht, wobei die Zusammensetzung aber dann nach Applikation eine sehr rasche Aushärtung aufweist, damit die gefertigten Teile rasch weiterbewegt werden können. Bei sehr kurzen Topfzeiten ergibt sich auch das Problem, dass die Mischung zu früh auszuhärten beginnt und damit Ausschüsse und unerwünschte Reinigungsarbeiten erzeugt. Bei zu langen Topfzeiten und anschliessend langsamer Aushärtung werden die Taktzeiten der Fertigung durch Wartezeiten erhöht, was ebenfalls unerwünscht ist. Zwar kann je nach Prozess die Topfzeit einer zweikomponentigen Siliconzusammensetzung dem Prozess angepasst werden. Allerdings bedingt dies eine sorgfältig angepasste Formulierung der Komponenten der zweikomponentigen Siliconzusammensetzung, was aufwändig ist und wiederum eine konstante, allein auf einen Prozess angepasste Topfzeit ergibt. Dies ist bei flexiblen Produktionsprozessen oder kleinen Stückzahlen oft nicht wirtschaftlich möglich.

Es besteht daher das Bedürfnis nach einer zweikomponentigen Siliconzusammensetzung, bei der die Topfzeit innerhalb eines bestimmten Bereiches mit einfachen Mitteln sogar erst bei der Applikation eingestellt werden kann. Weiterhin soll die Zusammensetzung, unabhängig von der gewählten Topfzeit, nach Ende der Topfzeit sehr rasch aushärten und stets die gleichen mechanischen Eigenschaften nach Aushärtung aufweisen. Zudem soll der Viskositätsanstieg der Mischung direkt nach dem Mischen sehr klein sein, damit gut maschinell appliziert werden kann, aber nach Ende der Topfzeit soll die Aushärtung sehr rasch fortschreiten, damit die Fertigungsteile mit der applizierten Zusammensetzung so rasch wie möglich weiterbewegt werden können.

### Darstellung der Erfindung

Aufgabe der vorliegenden Erfindung ist es daher, eine zweikomponentige Siliconzusammensetzung bereitzustellen, welche die Nachteile des Stands der Technik überwindet und über eine direkt bei der Applikation einstellbare Topfzeit verfügt, wobei die Zusammensetzung nach dem Mischen und während der Topfzeit einen sehr geringen Viskositätsanstieg aufweisen soll und nach Ende der Topfzeit in jedem Fall sehr rasch aushärtet. Weiterhin soll die Zusammensetzung unabhängig von der eingestellten Topfzeit in jedem Fall nach Aushärtung weitgehend identische mechanische Eigenschaften aufweisen.

Überraschenderweise wurde gefunden, dass zweikomponentige Siliconzusammensetzungen gemäss Anspruch 1 diese Aufgabe lösen.

Durch den für den Fachmann in keiner Weise nahe liegenden Einsatz einer Kombination spezifischer Organosilane als Vernetzer, können zweikomponentige Siliconzusammensetzungen zur Verfügung gestellt werden, welche eine einstellbare Topfzeit aufweisen, wobei der Bereich, innerhalb dessen die Topfzeit eingestellt werden kann, einzig durch das Mischverhältnis der beiden Komponenten der zweikomponentigen Siliconzusammensetzung eingestellt werden kann. Die mechanischen Eigenschaften der Zusammensetzung nach Aushärtung werden durch die Variation des Mischverhältnisses überraschenderweise kaum berührt. Somit können gemäss der vorliegenden Erfindung zweikomponentige Siliconzusammensetzungen formuliert werden, welche über eine innerhalb bestimmter Grenzen einstellbare Topfzeit verfügen und nach Ende der Topfzeit aber eine aussergewöhnlich rasche, gleichmässige Aushärtung zeigen. Die erfindungsgemässen zweikomponentigen Siliconzusammensetzungen sind deshalb besonders gut für automatisierte Applikation in der industriellen Fertigung geeignet und können bei Bedarf flexibel an wechselnde, bezüglich Topfzeitbedürfnis unterschiedliche Prozesse angepasst werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine zweikomponentige Siliconzusammensetzung, bestehend aus einer Komponente **A** umfassend
i) mindestens ein Hydroxylgruppen terminiertes Polydiorganosiloxan **P;**
ii) zwischen 0.05 und 5.0 Gew.-% Wasser, bezogen auf Komponente **A;**
und einer Komponente **B** umfassend
i) mindestens ein nicht kondensierbares Polyidiorganosiloxan als Weichmacher;
ii) mindestens einen Katalysator **K** für die Vernetzung von Polydiorganosiloxanen;
iii) zwischen 0 und 50 Gew.-%, bezogen auf Komponente **B,** mindestens eines ersten Organosilans **V1** nach Formel (I), 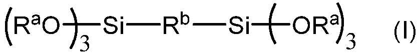
iv) zwischen 2 und 60 Gew.-%, bezogen auf Komponente **B,** mindestens eines zweiten Organosilans **V2** nach Formel (II), 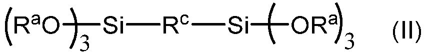
v) zwischen 0 und 25 Gew.-%, bezogen auf Komponente **B,** weitere Organosilane **V3** mit hydrolysierbaren Alkxoysilangruppen Si-OR^{a}, welche nicht unter die Formeln (I) und (II) fallen,

wobei R^{a} für ein Wasserstoffatom oder einen monovalenten, linearen oder verzweigten Alkylrest mit 1 bis 6 Kohlenstoffatomen steht,
R^{b} für einen divalenten, linearen oder verzweigten Alkylrest oder Alkenylrest mit 2 bis 20 Kohlenstoffatomen steht, und
R^{c} für einen divalenten, linearen oder verzweigten Alkylrest mit 2 bis 20 Kohlenstoffatomen steht, der mindestens eine sekundäre Aminogruppe sowie optional eine Hydroxylgruppe sowie einen Ethersauerstoff enthält; mit der Massgabe, dass die Zusammensetzung weniger als 10 mol-%, bezogen auf die Menge an Organosilan **V2,** an Organosilanen mit Epoxidgruppen enthält.

Im vorliegenden Dokument bezeichnet der Begriff "Silangruppe" eine an einen organischen Rest oder an einen Polyorganosiloxan-Rest gebundene Silylgruppe mit einer bis drei, insbesondere zwei oder drei, hydrolysierbaren Substituenten am Silicium-Atom. Besonders gebräuchliche hydrolysierbare Substituenten sind Alkoxy-Reste. Diese Silangruppen werden auch als "Alkoxysilangruppen" bezeichnet. Silangruppen können auch in partiell oder vollständig hydrolysierter Form vorhanden sein.

Als "Aminosilan" bzw. "Glycidoxysilan" werden Organoalkoxysilane bezeichnet, die am organischen Rest zusätzlich zur Silangruppe eine oder mehrere Amino- bzw. Glycidoxygruppen aufweisen.

Als "primäre Aminogruppe" bzw. "primärer Amin-Stickstoff" wird eine NH₂-Gruppe bzw. deren Stickstoffatom bezeichnet, die bzw. das an einen organischen Rest gebunden ist, und als "sekundäre Aminogruppe" bzw. "sekundärer Amin-Stickstoff" wird eine NH-Gruppe bzw. deren Stickstoffatom bezeichnet, die bzw. das an zwei organische Reste, welche auch gemeinsam Teil eines Rings sein können, gebunden ist, und als "tertiäre Aminogruppe" bzw. "tertiärer Amin-Stickstoff" wird eine N-Gruppe bzw. deren Stickstoffatom bezeichnet, die bzw. das an drei organische Reste, welche auch zu zweit oder zu dritt Teil eines oder mehrerer Ringe sein können, gebunden ist.

Der Begriff "organisches Polymer" umfasst ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde und im PolymerRückgrat mehrheitlich Kohlenstoffatome aufweist, sowie Umsetzungsprodukte eines solchen Kollektivs von Makromolekülen. Polymere mit einem Polyorganosiloxan-Rückgrat (gemeinhin als "Silicone" bezeichnet) stellen keine organischen Polymere im Sinne des vorliegenden Dokuments dar.

Unter "Molekulargewicht" versteht man im vorliegenden Dokument die molare Masse (in Gramm pro Mol) eines Moleküls oder eines Teils eines Moleküls, auch als "Rest" bezeichnet. Als "mittleres Molekulargewicht" wird das Zahlenmittel Mₙ einer oligomeren oder polymeren Mischung von Molekülen oder Resten bezeichnet, welches üblicherweise mittels Gelpermeationschromatographie (GPC) gegen Polystyrol als Standard bestimmt wird.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.

Mit "Poly" beginnende Substanznamen wie beispielsweise Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Unter dem Begriff "Topfzeit" wird die Verarbeitbarkeitsdauer von reaktiven Zusammensetzungen nach deren Applikation verstanden. Das Ende der Topfzeit ist in den meisten Fällen mit einem derartigen Viskositätsanstieg der Zusammensetzung verbunden, so dass keine zweckmässige Verarbeitung der Zusammensetzung mehr möglich ist.

Eine gestrichelte Linie in den Formeln in diesem Dokument stellt jeweils die Bindung zwischen einem Substituenten und dem zugehörigen Molekülrest dar. Als "Raumtemperatur" wird eine Temperatur von ca. 23°C bezeichnet.

Alle im Dokument erwähnten Industrienormen oder Standards beziehen sich, sofern nichts anderes angegeben, auf die zum Zeitpunkt der Einreichung der Patentanmeldung gültige Fassung der Industrienorm oder des Standards.

Die Begriffe "Masse" und "Gewicht" werden in diesem Dokument synonym verwendet. So bezeichnet ein "Gewichtsprozent" (Gew.-%) einen prozentualen Massenanteil, der sich, falls nichts anderes erwähnt wird, auf die Masse (das Gewicht) der gesamten Zusammensetzung, bzw. je nach Zusammenhang des gesamten Moleküls, bezieht.

### Komponente A

Die erste Komponente **A** der zweikomponentigen Siliconzusammensetzung enthält mindestens ein Hydroxylgruppen terminiertes Polydiorganosiloxan **P** und zwischen 0.05 und 5.0 Gew.-% Wasser, bezogen auf Komponente **A.**

### Polydiorganosiloxan P

Die Komponente **A** der zweikomponentigen Siliconzusammensetzung umfasst das Hydroxylgruppen terminierte Polydiorganosiloxan **P,** welches insbesondere ein Polydiorganosiloxan **P'** der Formel (IV) ist.

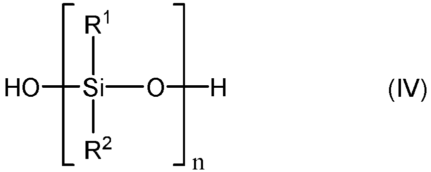

Dabei stehen die Reste R¹ und R² unabhängig voneinander für lineare oder verzweigte, einwertige Kohlenwasserstoffreste mit 1 bis 12 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen. Insbesondere stehen die Reste R¹ und R² für Alkylreste mit 1 bis 5, insbesondere mit 1 bis 3, C-Atomen, bevorzugt für Methylgruppen.

Der Index n ist so gewählt, dass das Gewichtsmittel des Molekulargewichts M_{w} des Polydiorganosiloxans **P** relativ zu Polystyrol 500 bis 250'000 g/mol beträgt.

Insbesondere ist das Hydroxylgruppen terminierte Polydiorganosiloxan **P'** ein Polydiorganosiloxan **P1** der Formel (I), wobei n so gewählt ist, dass das Gewichtsmittel des Molekulargewichts M_{w} des Polydiorganosiloxans **P1** relativ zu Polystyrol 30'000 bis 80'000 g/mol, insbesondere 40'000 bis 60'000 g/mol, beträgt; oder dass als Polydiorganosiloxan **P'** eine Mischung eingesetzt wird von
i") mindestens einem Hydroxylgruppen terminierten Polydiorganosiloxan **P2** der Formel (I), wobei n so gewählt ist, dass das Gewichtsmittel des Molekulargewichts M_{w} des Polydiorganosiloxans **P2** relativ zu Polystyrol > 80'000 bis 250'000 g/mol, insbesondere 90'000 bis 150'000 g/mol, beträgt; sowie
ii") mindestens einem Hydroxylgruppen terminierten Polydiorganosiloxan **P3** der Formel (I), wobei n so gewählt ist, dass das Gewichtsmittel des Molekulargewichts M_{w} des Polydiorganosiloxans **P3** relativ zu Polystyrol 500 bis ≤ 80'000 g/mol, insbesondere 500 bis 60'000 g/mol, bevorzugt 1'000 bis 30'000 g/mol beträgt.

Hydroxylgruppen terminierte Polydiorganosiloxane, wie sie insbesondere in Formel (I) dargestellt sind, sind bekannt und kommerziell erhältlich. Auch die Herstellung derartiger Polydiorganosiloxane erfolgt in bekannter Art und Weise. Beispielsweise ist sie beschrieben in US 4,962,152, dessen Offenbarung hiermit durch Bezugnahme eingeschlossen ist.

Die vorhergehend beschriebenen Hydroxylgruppen terminierten Polydiorganosiloxane **P** weisen bei 23°C vorzugsweise eine Viskosität zwischen 1 und 500'000 mPa·s, insbesondere zwischen 10 und 250'000 mPa·s, auf.

Weiterhin bevorzugt weist das Polydiorganosiloxan **P1** bei 23°C eine Viskosität zwischen 5'000 und 20'000 mPa·s, insbesondere zwischen 5'000 und 10'000 mPa·s, auf.

Handelt es sich beim Polydiorganosiloxan **P'** um eine Mischung ist von mindestens einem Hydroxylgruppen terminierten Polydiorganosiloxan **P2** und mindestens einem Hydroxylgruppen terminierten Polydiorganosiloxan **P3,** so weist das Polydiorganosiloxan **P2** bei 23°C vorzugsweise eine Viskosität zwischen 10'000 und 500'000 mPa·s, insbesondere zwischen 15'000 und 250'000 mPa·s, auf und das Polydiorganosiloxan **P3** weist bei 23°C vorzugsweise eine Viskosität zwischen 1 und 10'000 mPa·s, insbesondere zwischen 10 und 7'500 mPa·s, bevorzugt zwischen 20 und 6000 mPa·s auf. Die angegebenen Viskositäten werden gemessen nach DIN 53018.

Es kann vorteilhaft sein, mehrere verschiedene Polydiorganosiloxane **P2** und/oder **P3** als Mischung zu verwenden.

Wird als Polydiorganosiloxan **P'** eine Mischung von mindestens einem Polydiorganosiloxan **P2** und mindestens einem Polydiorganosiloxan **P3** eingesetzt, liegt der Gewichtsanteil an Polydiorganosiloxan **P2** in der Regel über dem Gewichtsanteil an Polydiorganosiloxan **P3.** Es ist jedoch zu berücksichtigen, dass die jeweiligen Anteile abhängig sind vom Molekulargewicht der jeweiligen Polydiorganosiloxane.

Die Komponente **A** enthält das das Hydroxylgruppen terminierte Polydiorganosiloxan **P** oder das Hydroxylgruppen terminierte Polydiorganosiloxan **P'** bevorzugt in einer Menge von zwischen 30 Gew.-% und 70 Gew.-%, bevorzugt zwischen 30 Gew.-% und 50 Gew.-%, bezogen auf die Komponente **A.**

Handelt es sich beim Polydiorganosiloxan **P'** um eine Mischung ist von mindestens einem Hydroxylgruppen terminierten Polydiorganosiloxan **P2** und mindestens einem Hydroxylgruppen terminierten Polydiorganosiloxan **P3,** so enthält Komponente **A** bevorzugt zwischen 20 Gew.-% und 60 Gew.-%, bevorzugt zwischen 30 Gew.-% und 50 Gew.-%, bezogen auf die Komponente **A,** an Hydroxylgruppen terminierten Polydiorganosiloxan **P2,** sowie zwischen 1 Gew.-% und 15 Gew.-%, bevorzugt zwischen 2 Gew.-% und 10 Gew.-%, bezogen auf die Komponente **A,** an Hydroxylgruppen terminierten Polydiorganosiloxan **P3.**

Die beschriebenen Polydiorganosiloxane **P** können in jeder Ausführungsform auch Anteile an Verzweigungen aufweisen (sogenannte T-Einheiten), welche Si-OH Gruppen an Seitenketten tragen. Es ist allerdings bevorzugt, dass die Polyidorganosiloxane vorwiegend linear und ohne SI-OH-reaktive Seitenketten ausgebildet sind. Für die beschriebenen Polydiorganosiloxane **P2** insbesondere kann es jedoch hinsichtlich der mechanischen Eigenschaften der ausgehärteten Zusammensetzung vorteilhaft sein, wenn ein geringer Anteil der Polydorganosiloxaneinheiten des Polydiorganosiloxans **P2** aus T-Einheiten besteht, bevorzugt 0-10%, inbesondere 0.01 bis 5%, meist bevorzugt 0.02 bis 1% der Siloxaneinheiten des Polydiorganosiloxans **P2.** Die restlichen Siloxaneinheiten sind in allen Fällen D-Einheiten, also streng lineare Siloxaneinheiten ohne Si-OH-Gruppen.

### Wasser

Die Komponente **A** der zweikomponentigen Siliconzusammensetzung umfasst weiterhin zwischen 0.05 Gew.-% und 5.0 Gew.-% Wasser, insbesondere emulgiertes Wasser, bezogen auf Komponente **A.** Wasser in der Komponente **A** führt zu einer raschen, gleichmässigen Aushärtung der gemischten zweikomponentigen Zusammensetzung und ist wesentlich, um eine erfindungsgemäss einstellbare Topfzeit zu ermöglichen. Bevorzugt ist Wasser mit einer Menge von zwischen 0.1 Gew.-% und 2.5 Gew.-%, insbesondere zwischen 0.1 Gew.-% und 1.5 Gew.-%, bezogen auf Komponente **A,** enthalten.

Bevorzugt wird das Wasser dabei nicht in freier Form, sondern als Emulsion (beispielsweise in Siliconöl) eingemischt. Dies ermöglicht eine homogenere Einmischung mit geringen Konzentrationsgradienten und nach Applikation gleichmässigerer Aushärtung der gemischten Zusammensetzung. Als vorteilhaft haben sich beispielsweise Wasser/Öl Emulsionen mit 40 bis 60 Gew.-% Wasser, bezogen auf die Emulsion, insbesondere mit 50 Gew.-% Wasser, bezogen auf die Emulsion, erwiesen.

Die Komponente **A** der zweikomponentigen Siliconzusammensetzung kann weiterhin zusätzliche Additive, wie beispielsweise Füllstoffe, Weichmacher, Pigmente, sowie Formulierungsadditive wie Dispersionsadditive oder Thixotropiermittel enthalten. Solche Zusatzstoffe sind dem Fachmann der Siliconformulierung bekannt. Diese Zusatzstoffe können die Verarbeitbarkeit und Mischbarkeit der Komponente **A** und/oder der gemischten zweikomponentigen Siliconzusammensetzung verbessern. Sie sind aber nicht wesentlich für die Wirkung der Erfindung.

### Komponente B

Die zweite Komponente **B** der zweikomponentigen Siliconzusammensetzung enthält:
i) mindestens ein nicht kondensierbares Polyidiorganosiloxan als Weichmacher;
ii) mindestens einen Katalysator **K** für die Vernetzung von Polydiorganosiloxanen;
iii) zwischen 0 und 50 Gew.-%, bezogen auf Komponente **B,** mindestens eines ersten Organosilans **V1** nach Formel (I), 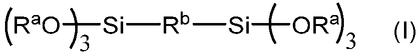
iv) zwischen 2 und 60 Gew.-%, bezogen auf Komponente **B,** mindestens eines zweiten Organosilans **V2** nach Formel (II), 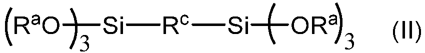
v) zwischen 0 und 25 Gew.-%, bezogen auf Komponente **B,** weitere Organosilane **V3** mit hydrolysierbaren Alkxoysilangruppen Si-OR^{a}, welche nicht unter die Formeln (I) und (II) fallen,

wobei R^{a} für ein Wasserstoffatom oder einen monovalenten, linearen oder verzweigten Alkylrest mit 1 bis 6 Kohlenstoffatomen steht,
R^{b} für einen divalenten, linearen oder verzweigten Alkylrest oder Alkenylrest mit 2 bis 20 Kohlenstoffatomen steht, und
R^{c} für einen divalenten, linearen oder verzweigten Alkylrest mit 2 bis 20 Kohlenstoffatomen steht, der mindestens eine sekundäre Aminogruppe sowie optional eine Hydroxylgruppe sowie einen Ethersauerstoff enthält; mit der Massgabe, dass die Zusammensetzung weniger als 10 mol-%, bezogen auf die Menge an Organosilan **V2,** an Organosilanen mit Epoxidgruppen enthält.

### Weichmacher

Komponente **B,** und bevorzugt auch Komponente **A,** enthält mindestens ein nicht kondensierbares Polyidiorganosiloxan als Weichmacher. Dabei handelt es sich üblicherweise um ein Polydiorganosiloxan, dessen Endgruppen mit Alkyl- oder Vinylgruppen verschlossen sind und das Polydiorganosiloxan demzufolge keine Kondensations- oder Vernetzungsreaktionen eingehen kann.

Solche Weichmacher sind dem Fachmann der Siliconformulierung bestens bekannt und diese werden beispielsweise unter der Handelsnamenserie Wacker^{®} AK von Wacker Chemie, Deutschland vertrieben und weiter unten detaillierter beschrieben. Diese nicht reaktiven Polydiorganosiloxane werden auch als Siliconöle bezeichnet. Sie sind in verschiedenen Kettenlängen und damit Viskositäten erhältlich und haben vor allem den Zweck, Festkörperbestandteile wie Füllstoffe gut einmischbar zu machen sowie die mechanischen Eigenschaften und Fliesseigenschaften der Zusammensetzung zu verbessern.

Komponente **B** enthält bevorzugt zwischen 30 Gew.-% und 50 Gew.-% an Weichmacher.

Komponente **A** enthält bevorzugt zwischen 1 Gew.-% und 10 Gew.-% an Weichmacher. Komponente **A** benötigt weniger oder gar keinen Weichmacher, da Komponente **A** bereits flüssige Hydroxylgruppen terminierte Polydiorganosiloxane enthält.

Es kann von Vorteil sein, verschiedene solche Weichmacher zu kombinieren, beispielsweise mit unterschiedlichen Viskositäten oder unterschiedlichen Endgruppen.

Bevorzugt enthält Komponente **B** mindestens einen Weichmacher mit Vinylsilan-Endgruppen.

### Katalysator K

Die Komponente **B** der zweikomponentigen Siliconzusammensetzung umfasst weiterhin mindestens einen Katalysator **K** für die Vernetzung von Polydiorganosiloxanen. Insbesondere handelt es sich beim Katalysator **K** um eine zinnorganische Verbindung oder um ein Titanat.

Bevorzugte zinnorganische Verbindungen sind Dialkylzinnverbindungen wie sie beispielsweise ausgewählt sind aus der Gruppe bestehend aus Dimethylzinndi-2-ethylhexanoat, Dimethylzinndilaurat, Di-n-butylzinndiacetat, Di-n-butylzinndi-2-ethylhexanoat, Di-n-butylzinndicaprylat, Di-n-butylzinndi-2,2-dimethyloctanoat, Di-n-butylzinndilaurat, Di-n-butylzinn-distearat, Di-n-butylzinndimaleinat, Di-n-butylzinndioleat, Di-n-butylzinndiacetat, Di-n-octylzinndi-2-ethylhexanoat, Di-n-octylzinndi-2,2-dimethyloctanoat, Di-n-octylzinndimaleinat und Di-n-octylzinndilaurat.

Als Titanate bzw. Organotitanate werden Verbindungen bezeichnet, welche mindestens einen über ein Sauerstoffatom an das Titanatom gebundenen Liganden aufweisen. Als über eine Sauerstoff-Titan-Bindung an das Titanatom gebundene Liganden eignen sich dabei diejenigen, welche ausgewählt sind aus der Gruppe bestehend aus Alkoxygruppe, Sulfonatgruppe, Carboxylatgruppe, Dialkylphosphatgruppe, Dialkylpyrophosphatgruppe und Acetylacetonatgruppe. Bevorzugte Titanate sind beispielsweise Tetrabutyl- oder Tetraisopropyltitanat.

Weiterhin geeignete Titanate weisen mindestens einen mehrzähnigen Liganden, auch Chelatligand genannt, auf. Insbesondere ist der mehrzähnige Ligand ein zweizähniger Ligand.

Geeignete Titanate sind beispielsweise unter den Handelsnamen Tyzor^{®} AA, GBA, GBO, AA-75, AA-65, AA-105, DC, BEAT, IBAY kommerziell erhältlich von der Firma DuPont, USA.

Selbstverständlich ist es möglich oder in gewissen Fällen sogar bevorzugt, Mischungen verschiedener Katalysatoren einzusetzen.

Der Anteil des Katalysators **K** für die Vernetzung von Polydiorganosiloxanen beträgt vorzugsweise 0.05 bis 10 Gew.-%, insbesondere 0.1 bis 5 Gew.-%, bevorzugt 0.25 bis 4 Gew.-%, bezogen auf Komponente **B** der zweikomponentigen Siliconzusammensetzung.

Die Menge an Katalysator **K** beeinflusst die Topfzeit und den einstellbaren Bereich der Topfzeit der gemischten zweikomponentigen Zusammensetzung. Je höher der Gehalt an Katalysator, desto kürzer wird tendenziell die einstellbare Topfzeit sowie desto schneller wird die anschliessende Aushärtung. Diese Effekte werden jedoch in hohem Masse auch von der Wahl der Vernetzer beeinflusst. Darauf wird weiter unten eingegangen.

Die Komponente **B** der zweikomponentigen Siliconzusammensetzung enthält weiterhin mindestens einen, bevorzugt mehrere verschiedene Vernetzer für Siliconzusammensetzungen. Als Vernetzer werden dabei organische Siliciumverbindungen mit hydrolysierbaren Alkoxysilangruppen bezeichnet. Die vorliegende Erfindung unterscheidet drei verschiedene Vernetzertypen **V1, V2** und **V3,** welche im Folgenden näher erläutert werden.

Es ist wesentlich für die Wirkung der vorliegenden Erfindung, dass alle Vernetzer in der Zusammensetzung dieselben Alkoxysilangruppen tragen.

Beispielsweise können alle Vernetzer Methoxysilangruppen oder alle Vernetzer Ethoxysilangruppen aufweisen. Mischungen verschiedener Alkoxysilangruppen sind nicht vorteilhaft und können den Effekt der Erfindung behindern oder gar verhindern.

### Vernetzer V1

Komponente **B** der erfindungsgemässen Zusammensetzung enthält zwischen 0 und 50 Gew.-%, bezogen auf Komponente **B,** mindestens eines ersten Organosilans **V1** nach Formel (I), 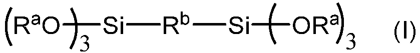
wobei R^{a} für ein Wasserstoffatom oder einen monovalenten, linearen oder verzweigten Alkylrest mit 1 bis 6 Kohlenstoffatomen steht,
R^{b} für einen divalenten, linearen oder verzweigten Alkylrest oder Alkenylrest mit 2 bis 20 Kohlenstoffatomen steht.

Bevorzugt steht R^{a} für ein Wasserstoffatom oder einen Methyl- oder Ethylrest. Am meisten bevorzugt steht R^{a} für ein Wasserstoffatom oder einen Ethylrest. Silane **V1** mit Ethylresten als R^{a}, welche nach Hydrolyse in Wasserstoffatome überführt werden, sind besonders vorteilhaft, weil sie einerseits eine besonders gut kontrollierbare Topfzeiteinstellung ermöglichen, trotzdem sehr rasch aushärten, und darüber hinaus keine giftigen Methanolemissionen verursachen.

Bevorzugt steht R^{b} für einen linearen Alkylrest oder Alkenylrest mit 2 bis 12 Kohlenstoffatomen, bevorzugt mit 2 bis 6 Kohlenstoffatomen, meist bevorzugt einen Ethylrest, einen Propylrest, einen Ethylenrest oder einen Propenylrest.

Organosilan **V1** ist nicht unbedingt nötig für den Effekt der Erfindung, weist aber in Kombination mit Organosilan **V2** den Vorteil auf, dass es bei Anwesenheit in der Formulierung die Topfzeit besser einstellbar macht. Unter Vernwedung eines Organosilans **V1** kann die maximal mögliche Topfzeit der Zusammensetzung erhöht werden, ohne jedoch die Aushärtegeschwindigkeit nach Ende der Topfzeit wesentlich zu verlangsamen.

Bevorzugte Ausführungsformen der erfindungsgemässen Zusammensetzung enthalten zwischen 10 Gew.-% und 30 Gew.-%, bevorzugt zwischen 12 Gew.- % und 20 Gew.-%, an Organosilan **V1,** bezogen auf Komponente **B.**

### Vernetzer V2

Komponente **B** der erfindungsgemässen Zusammensetzung enthält zwischen 2 und 60 Gew.-%, bezogen auf Komponente **B,** mindestens eines zweiten Organosilans **V2** nach Formel (II), 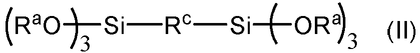
wobei R^{a} dieselbe Bedeutung wie für das Organosilan **V1** beschrieben aufweist, und
R^{c} für einen divalenten, linearen oder verzweigten Alkylrest mit 2 bis 20 Kohlenstoffatomen steht, der mindestens eine sekundäre Aminogruppe sowie optional eine Hydroxylgruppe sowie einen Ethersauerstoff enthält.

Bevorzugt besitzt Organosilan **V2** eine Struktur wie in Formel (IIa) beschrieben, 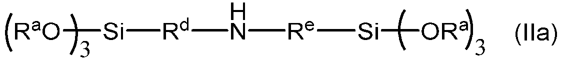
wobei R^{d} für einen divalenten, linearen oder verzweigten Alkylrest mit 2 bis 10 Kohlenstoffatomen steht, der optional eine Hydroxylgruppe sowie einen Ethersauerstoff enthält, und
R^{e} für einen divalenten, linearen oder verzweigten Alkylrest mit 2 bis 10 Kohlenstoffatomen steht.

Bevorzugte Ausführungsformen der erfindungsgemässen Zusammensetzung enthalten zwischen 5 Gew.-% und 50 Gew.-%, bevorzugt zwischen 10 Gew.-% und 45 Gew.-%, an Organosilan **V2,** bezogen auf Komponente **B.**

In einer besonders bevorzugten Ausführungsform handelt es sich beim Organosilan **V2** um ein Organosilan **V2a,** bei dem die Reste R^{d} und R^{e} in Formel (IIa) beide für einen divalenten, linearen oder verzweigten Alkylrest mit 2 bis 10 Kohlenstoffatomen stehen, insbesondere einen Propylrest.

In einer anderen besonders bevorzugten Ausführungsform handelt es sich beim Organosilan **V2** um ein Organosilan **V2b,** bei dem Rest R^{e} in Formel (IIa) für einen divalenten, linearen oder verzweigten Alkylrest mit 2 bis 10 Kohlenstoffatomen steht, insbesondere einen Propylrest, und Rest R^{d} einen divalenten, linearen oder verzweigten Alkylrest mit 2 bis 10 Kohlenstoffatomen, insbesondere einen Propylrest, enthält sowie zusätzlich eines der beiden Strukturelemente enthält, die in Formel (IIb) dargestellt sind. Dabei steht die NH Gruppe in Formel (IIb) für die NH Gruppe in Formel (IIa) und die gestrichelte Linie am Sauerstoffatom ist an den divalenten, linearen oder verzweigten Alkylrest mit 2 bis 10 Kohlenstoffatomen, insbesondere den Propylrest, gebunden.

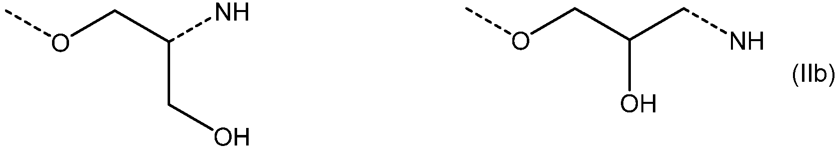

Organosilane **V2a** sind kommerziell erhältlich, beispielsweise unter dem Handelsnamen Dynasylan^{®} 1122 (Evonik).

Organosilane **V2b** sind leicht aus kommerziell verfügbaren Organosilanen herstellbar, beispielsweise aus der Reaktion einer äquimolaren Menge an 3-Aminopropyltriethoxysilan mit 3-Glyxidoxypropyltriethoxysilan unter Wasserausschluss bis zur vollständigen Umsetzung der Epoxygruppen.

In einer bevorzugten Ausführungsform der erfindungsgemässen Zusammensetzung wird ausschliesslich Organosilan **V2a** als Organosilan **V2** eingesetzt. In dieser Ausführungsform beträgt der Gehalt an Katalysator **K** bevorzugt zwischen 0.1 Gew.-% und 2 Gew.-%, insbesondere zwischen 0.2 Gew.-% und 1 Gew.-%, bezogen auf Komponente **B.** Dies ermöglicht eine genau einstellbare, anwenderfreundliche aber doch kurze Topfzeit und eine sehr rasche Aushärtung und ist besonders für maschinelle, automatisierte Applikation mit kurzen Taktzeiten geeignet.

Bevorzugte Ausführungsformen dieser Ausführungsform der erfindungsgemässen Zusammensetzung enthalten zwischen 10 Gew.-% und 50 Gew.-%, bevorzugt zwischen 15 Gew.-% und 45 Gew.-%, an Organosilan **V2a,** bezogen auf Komponente **B.**

In einer anderen bevorzugten Ausführungsform der erfindungsgemässen Zusammensetzung wird ausschliesslich Organosilan **V2b** als Organosilan **V2** eingesetzt. In dieser Ausführungsform beträgt der Gehalt an Katalysator **K** bevorzugt zwischen 1 Gew.-% und 4 Gew.-%, insbesondere zwischen 1.5 Gew.-% und 3.5 Gew.-%, bezogen auf Komponente **B.** Dies ermöglicht eine genau einstellbare, besonders lange Topfzeit und trotzdem eine rasche anschliessende Aushärtung und ist besonders für manuelle Applikation oder Anwendung an besonders grossen Objekten geeignet.

Bevorzugte Ausführungsformen dieser Ausführungsform der erfindungsgemässen Zusammensetzung enthalten zwischen 10 Gew.-% und 50 Gew.-%, bevorzugt zwischen 15 Gew.-% und 45 Gew.-%, an Organosilan **V2b,** bezogen auf Komponente **B.**

In einer weiteren bevorzugten Ausführungsform der erfindungsgemässen Zusammensetzung wird eine Mischung aus Organosilan **V2a** und Organosilan **V2b** als Organosilan **V2** eingesetzt. In dieser Ausführungsform beträgt der Gehalt an Katalysator **K** bevorzugt zwischen 0.1 Gew.-% und 2 Gew.-%, insbesondere zwischen 0.2 Gew.-% und 1 Gew.-%, bezogen auf Komponente **B.** Dies ermöglicht eine sehr genau einstellbare, anwenderfreundliche aber doch kurze bis mittlere Topfzeit und eine sehr rasche Aushärtung und ist besonders für maschinelle, automatisierte Applikation mit kurzen Taktzeiten geeignet, sowie besonders gut für eine frei wählbare Topfzeit mittels verschiedenen Mischungsverhältnissen der Komponente **A** und **B.** Dies ist besonders vorteilhaft für eine flexible Applikation oder bei komplexen Anwendungen, wo eine wechselnde Topfzeit aber stets identische Endeigenschaften der gehärteten Zusammensetzung erwünscht ist.

In dieser Ausführungsform werden die Organosilane **V2a** und **V2b** bevorzugt im Gewichtsverhältnis zwischen 1:2 und 2:1 in der Formulierung eingesetzt. Bevorzugte Ausführungsformen dieser Ausführungsform der erfindungsgemässen Zusammensetzung enthalten zwischen 5 Gew.-% und 25 Gew.-%, bevorzugt zwischen 7.5 Gew.-% und 22.5 Gew.-%, an Organosilan **V2a,** bezogen auf Komponente **B,** sowie zwischen 5 Gew.-% und 25 Gew.-%, bevorzugt zwischen 7.5 Gew.-% und 22.5 Gew.-%, an Organosilan **V2a,** bezogen auf Komponente **B.**

### Vernetzer V3

Die Komponente **B** der zweikomponentigen Siliconzusammensetzung umfasst weiterhin bevorzugt zwischen 0 und 25 Gew.-%, bezogen auf Komponente **B,** weitere Organosilane **V3** mit hydrolysierbaren Alkxoysilangruppen Si-OR^{a}, welche nicht unter die Formeln (I) und (II) fallen. Diese dienen ebenfalls als Vernetzer, sind jedoch optional.

Das zusätzliche Organosilan **V3** ist insbesondere ein Silan der Formel (III).

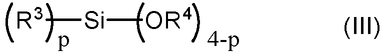

Der Rest R³ steht dabei unabhängig voneinander für einen linearen oder verzweigten, einwertigen Kohlenwasserstoffrest mit 1 bis 12 C-Atomen, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist.

Der Rest R⁴ steht für einen Rest R^{a} wie weiter oben beschrieben.

Der Index p steht für einen Wert von 0 bis 4, mit der Massgabe, dass falls p für einen Wert von 3 oder 4 steht, mindestens p-2 Reste R³ jeweils mindestens eine mit den Hydroxylgruppen des Polydiorganosiloxans **P** reaktive, insbesondere kondensierbare, Gruppe, also beispielsweise eine Hydroxylgruppe aufweisen. Insbesondere steht p für einen Wert von 0, 1 oder 2, bevorzugt für einen Wert von 0.

Für die Wahl des Silans der Formel (III) als Vernetzer für Polydiorganosiloxane können unterschiedliche Anforderungen an die zweikomponentige Siliconzusammensetzung ausschlaggebend sein. Einerseits spielt die Reaktivität des Silans eine wichtige Rolle, wobei grundsätzlich höherreaktive Silane bevorzugt werden. Aus diesem Grund ist beispielsweise eine Vinylgruppe gegenüber einer Methylgruppe oder eine Methylgruppe gegenüber einer Ethylgruppe als Rest R³ bevorzugt. Andererseits können auch toxikologische Gründe für die Wahl des Vernetzers ausschlaggebend sein. Beispielsweise ist deshalb Tetraethoxysilan als Vernetzer gegenüber Tetramethoxysilan bevorzugt.

Beispiele geeigneter Silane der Formel (III) sind Methyltrimethoxysilan, Chlormethyltrimethoxysilan, Ethyltrimethoxysilan, Propyltrimethoxysilan, Vinyltrimethoxysilan, Methyltriethoxysilan, Vinyltriethoxysilan, Phenyltriethoxysilan, Methyltripropoxysilan, Phenyltripropoxysilan, Tetramethoxysilan, Tetraethoxysilan, Tetra-n-propoxysilan oder Tetra-n-butoxysilan.

Besonders bevorzugt handelt es sich beim Silan der Formel (III) um Vinyltriethoxysilan, Methyltriethoxysilan, Dimethyltriethoxysilan oder Tetraethoxysilan oder deren Mischung.

Weiterhin können die Silane auch bereits teilweise (ein Teil aller R⁴ = H) oder vollständig hydrolysiert (alle R⁴ = H) vorliegen. Aufgrund der stark erhöhten Reaktivität von teilweise oder vollständig hydrolysierten Silanen kann ihr Einsatz als Vernetzer vorteilhaft sein. Dem Fachmann ist dabei bekannt, dass es beim Einsatz von teilweise oder vollständig hydrolysierten Silanen zur Bildung von oligomeren Siloxanen, insbesondere zu Dimeren und/oder Trimeren kommen kann, welche durch Kondensation von hydrolysierten Silanen gebildet werden. Demnach können als Vernetzer für die zweikomponentige Siliconzusammensetzung auch oligomere Siloxane eingesetzt werden.

Beispielsweise sind geeignete oligomere Siloxane Hexamethoxydisiloxan, Hexaethoxydisiloxan, Hexa-n-propoxydisiloxan, Hexa-n-butoxydisiloxan, Octaethoxytrisiloxan, Octa-n-butoxytrisiloxan und Decaethoxytetrasiloxan.

Selbstverständlich kann als Vernetzer für die zweikomponentige Siliconzusammensetzung auch eine beliebige Mischung der vorhergehend genannten Silane eingesetzt werden.

Der Anteil des Organosilans **V3** beträgt vorzugsweise 0.1 bis 20 Gew.-%, insbesondere 1 bis 15 Gew.-%, bevorzugt 2 bis 12 Gew.-%, bezogen auf Komponente **B** der zweikomponentigen Siliconzusammensetzung.

Die zweikomponentige Siliconzusammensetzung kann in einer oder beiden der Komponenten **A** und **B** gegebenenfalls noch weitere Bestandteile enthalten. Derartige zusätzliche Bestandteile sind insbesondere Weichmacher, welche zwingend sind in Komponente **B,** anorganische und/oder organische Füllstoffe, Härtungsbeschleuniger, Pigmente, Haftvermittler, Verarbeitungshilfsmittel, Rheologiemodifikatoren, Stabilisatoren, Farbstoffe, Inhibitoren, Hitzestabilisatoren, Antistatika, Flammschutzmittel, Biozide, Wachse, Verlaufsmittel, Thixotropierungsmittel und weitere dem Fachmann bekannte gängige Rohstoffe und Additive.

Beim Einsatz von derartigen optionalen Bestandteilen ist es wichtig darauf zu achten, dass Bestandteile, welche durch Reaktion untereinander oder mit anderen Inhaltsstoffen die Lagerstabilität der Zusammensetzung beeinträchtigen könnten, getrennt voneinander, aufbewahrt werden.

Weiterhin ist es vorteilhaft, alle genannten, in der zweikomponentigen Siliconzusammensetzung gegebenenfalls vorhandenen, Bestandteile so auszuwählen, dass die Lagerstabilität der beiden Komponenten der zweikomponentigen Siliconzusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen zweikomponentigen Siliconzusammensetzung führende Reaktionen während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Als Weichmacher sind besonders trialkylsilylterminierte Polydialkylsiloxane geeignet, insbesondere trimethylsilylterminierte Polydimethylsiloxane, wie weiter oben bereits beschreiben. Bevorzugt werden trimethylsilylterminierte Polydimethylsiloxane mit Viskositäten zwischen 1 und 10'000 mPa·s. Besonders bevorzugt sind Viskositäten zwischen 10 und 1'000 mPa·s. Es können jedoch auch trimethylsilylterminierte Polydimethylsiloxane eingesetzt werden, bei denen einige der Methylgruppen durch andere organische Gruppen wie zum Beispiel Phenyl, Vinyl oder Trifluorpropyl ersetzt sind. Obwohl besonders bevorzugt lineare trimethylsilylterminierte Polydimethylsiloxane als Weichmacher eingesetzt werden, können auch solche Verbindungen verwendet werden, die verzweigt sind. Derartige verzweigte Verbindungen entstehen dadurch, dass in den zu ihrer Herstellung dienenden Ausgangsstoffen kleine Mengen tri- oder tetrafunktioneller Silane verwendet werden. Es ist auch möglich anstatt der Polysiloxan-Weichmacher, andere organische Verbindungen, wie zum Beispiel bestimmte Kohlenwasserstoffe oder deren Gemische, als Weichmacher einzusetzen. Derartige Kohlenwasserstoffe können aromatisch oder aliphatisch sein. Bei der Auswahl ist insbesondere darauf zu achten, dass diese Kohlenwasserstoffe eine geringe Flüchtigkeit und eine hinreichende Verträglichkeit mit den übrigen Bestandteilen der Siliconzusammensetzung aufweisen.

Vorzugsweise weist die Zusammensetzung in einer oder beiden der Komponenten **A** und **B** weiterhin mindestens einen Füllstoff auf. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Es können sowohl aktive, als auch passive Füllstoffe in der zweikomponentigen Siliconzusammensetzung eingesetzt werden. Bei aktiven Füllstoffen treten chemische oder physikalische Wechselwirkungen mit dem Polymer auf, bei passiven Füllstoffen treten diese nicht oder nur in untergeordnetem Umfang auf.

Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, calcinierte Kaoline, Aluminiumoxide, Aluminiumhydroxide, Kieselsäuren, insbesondere hochdisperse Kieselsäuren aus Pyrolyseprozessen, Russ, insbesondere industriell hergestellter Russ ("carbon black"), Aluminiumsilicate, Magnesium-Aluminiumsilicate, Zirkoniumsilicate, Quarzmehl, Christobalitmehl, Diatomeenerde, Glimmer, Eisenoxide, Titanoxide, Zirconiumoxide, Gips, Annalin, Bariumsulfat (BaSO₄, auch Baryt oder Schwerspat genannt), Borcarbid, Bornitrid, Graphit, Kohlefasern, Glasfasern oder Glashohlkugeln, deren Oberfläche gegebenenfalls mit einem Hydrophobierungsmittel behandelt ist. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

In einer bevorzugten Ausführungsform enthält die Siliconzusammensetzung hochdisperse Kieselsäuren aus Pyrolyseprozessen oder Calciumcarbonate als Füllstoff.

Es ist durchaus möglich und kann sogar von Vorteil sein, eine Mischung verschiedener Füllstoffe einzusetzen.

Eine geeignete Menge Füllstoff liegt beispielsweise im Bereich von 10 bis 70 Gew.-%, insbesondere 15 bis 60 Gew.-%, bevorzugt 30 bis 60 Gew.-%, bezogen auf die gesamte zweikomponentige Siliconzusammensetzung.

Besonders geeignet als Haftvermittler sind Alkoxysilane, welche vorzugsweise mit funktionellen Gruppen substituiert sind. Die funktionelle Gruppe ist beispielsweise eine Aminopropyl-, Glycidoxypropyl- oder Mercaptopropylgruppe. Bevorzugt sind aminofunktionelle Gruppen. Bei den Alkoxygruppen derartiger Silane handelt es sich meist um eine Methoxy- oder Ethoxygruppe. Besonders bevorzugt sind Aminopropyltrimethoxysilan, 3-Aminopropyltriethoxysilan, 3-(2-Aminoethyl)-aminopropyltriethoxysilan und 3-Mercaptopropyltriethoxysilan. Es ist auch möglich, ein Gemisch von Haftvermittlern einzusetzen. Weiterhin eignen sich als Haftvermittler beispielsweise auch aminofunktionelle Alkylsilsesquioxane wie aminofunktionelles Methylsilsesquioxan oder aminofunktionelles Propylsilsesquioxan, alkoxylierte Alkylenamine, insbesondere ethoxylierte und/oder propoxylierte Alkylendiamine, sowie weitere, insbesondere substituierte, Oligomere, Polymere oder Copolymere auf Basis von Polyalkylenglykolen.

Es gilt jedoch die Massgabe, dass die Zusammensetzung weniger als 10 mol- %, bezogen auf die Menge an Organosilan **V2,** an Organosilanen mit Epoxidgruppen, bzw. Glycidoxygruppen, enthält. Bevorzugt enthält die Zusammensetzung weniger als 5 mol-%, insbesondere weniger als 1 mol-%, bezogen auf die Menge an Organosilan **V2,** an Organosilanen mit Epoxidgruppen. Die Anwesenheit von Organosilanen mit Epoxygruppen in Mengen über diesen Bereichen führt dazu, dass der erfindungsgemässe Effekt signifikant behindert wird und die Zusammensetzung nicht mehr richtig aushärtet.

Es ist dem Fachmann klar, dass bei der Verwendung von Silanen als Haftvermittler die Möglichkeit besteht, dass diese je nach Bedingungen, beispielsweise Feuchtigkeit, teilweise oder vollständig hydrolysiert vorliegen können. Weiterhin ist dem Fachmann bekannt, dass es bei der Anwesenheit solcher teilweise oder vollständig hydrolysierten Silane durch Kondensationsreaktionen zur Bildung von oligomeren Siloxanen, insbesondere zu Dimeren und/oder Trimeren kommen kann.

Der Anteil des Haftvermittlers beträgt vorzugsweise 0.1 bis 15 Gew.-%, insbesondere 1 bis 10 Gew.-%, bevorzugt 1 bis 5 Gew.-%, der gesamten zweikomponentigen Siliconzusammensetzung. In bevorzugten Ausführungsformen, insbesondere unter Verwendung von Organosilanen **V2b,** enthält die Zusammensetzung jedoch vorzugsweise keine weiteren Haftvermittler.

Dem Fachmann ist bestens bekannt, dass Bestandteile wie sie insbesondere vorhergehend aufgeführt sind nicht nur eine einzige, ihnen zugeschriebene Funktion oder Wirkung aufweisen können. Vielmehr ist es üblich, dass ein einzelner Bestandteil oder eine einzelne Verbindungen mehrere Funktionen aufweist. So sind beispielsweise manche Haftvermittler auch Vernetzer oder Füllstoffe gleichzeitig auch Rheologiemodifikatoren oder dergleichen. Beispielsweise weisen die Organosilane **V2,** und in besonderem Masse **V2b,** eine gute Haftvermittlerwirkung auf.

Eine besonders bevorzugte Ausführungsform der Komponente **A** der erfindungsgemässen Siliconzusammensetzung umfasst:
zwischen 30 Gew.-% und 60 Gew.-%, bevorzugt zwischen 40 Gew.-% und 50 Gew.-%, bezogen auf Komponente **A,** des mindestens einen Hydroxylgruppen terminierten Polydiorganosiloxans **P** wie vorgängig beschrieben;
zwischen 0.05 Gew.-% und 5.0 Gew.-%, bevorzugt zwischen 0.1 Gew.-% und 2 Gew.-% Wasser, bezogen auf Komponente **A;** sowie
gegebenenfalls Weichmacher, Füllstoffe, Formulierungsadditive, Pigmente, und weitere Additive wie vorgängig beschrieben.

Besonders bevorzugte Ausführungsformen dieser Ausführungsform enthalten als Polymer **P** eine Mischung aus
zwischen 28 Gew.-% und 50 Gew.-%, bevorzugt zwischen 30 Gew.-% und 45 Gew.-%, bezogen auf Komponente **A,** Polymer **P2** wie vorgängig beschrieben; und
zwischen 2 Gew.-% und 10 Gew.-%, bevorzugt zwischen 3 Gew.-% und 8 Gew.-%, bezogen auf Komponente **A,** Polymer **P3** wie vorgängig beschrieben.

Eine besonders bevorzugte Ausführungsform der Komponente **B** der erfindungsgemässen Siliconzusammensetzung umfasst:
zwischen 0.1 Gew.-% und 4 Gew.-%, bevorzugt zwischen 0.25 Gew.-% und 3 Gew.-%, bezogen auf Komponente **B,** Katalysator **K** wie vorgängig beschrieben; sowie
zwischen 25 Gew.-% und 60 Gew.-%, bevorzugt zwischen 30 Gew.-% und 50 Gew.-%, bezogen auf Komponente **B,** Weichmacher wie vorgängig beschrieben; sowie
zwischen 5 Gew.-% und 25 Gew.-%, bevorzugt zwischen 10 Gew.-% und 20 Gew.-%, bezogen auf Komponente **B,** Organosilan **V1** wie vorgängig beschrieben; sowie
zwischen 5 Gew.-% und 25 Gew.-%, bevorzugt zwischen 7.5 Gew.-% und 20 Gew.-%, bezogen auf Komponente **B,** Organosilan **V2a** wie vorgängig beschrieben; sowie
zwischen 5 Gew.-% und 25 Gew.-%, bevorzugt zwischen 7.5 Gew.-% und 20 Gew.-%, bezogen auf Komponente **B,** Organosilan **V2b** wie vorgängig beschrieben; sowie
zwischen 5 Gew.-% und 25 Gew.-%, bevorzugt zwischen 10 Gew.-% und 20 Gew.-%, bezogen auf Komponente **B,** Organosilan **V3** wie vorgängig beschrieben; sowie
gegebenenfalls Füllstoffe, Formulierungsadditive, Pigmente, und weitere Additive wie vorgängig beschrieben.

Die erfindungsgemässe zweikomponentige Siliconzusammensetzung wird typischerweise in einer Verpackung aufbewahrt, welche zwei von einander getrennte Kammern aufweist. Die Komponente **A** ist hierbei in der einen Kammer und die Komponente **B** ist in der anderen Kammer der Verpackung vorhanden. Geeignete Verpackungen sind beispielsweise Doppelkartuschen, wie Zwillings- oder Koaxialkartuschen, oder Mehrkammerschlauchbeutel mit Adapter. Bevorzugt erfolgt das Mischen der beiden Komponenten **A** und **B** mit Hilfe eines Statikmischers, welcher auf die Verpackung mit zwei Kammern aufgesetzt werden kann.

Solche geeigneten Verpackungen sind beispielsweise beschrieben in US 2006/0155045 A1, WO 2007/096355 A1 und in US 2003/0051610 A1.

In einer grosstechnischen Anlage werden die beiden Komponenten **A** und **B** typischerweise in Fässern oder Hobbocks voneinander getrennt aufbewahrt und bei der Applikation, beispielsweise mittels Zahnradpumpen, ausgepresst und vermischt. Die Zusammensetzung kann dabei von Hand oder in einem automatisierten Prozess mittels Roboter auf ein Substrat aufgetragen werden.

Insbesondere wird die erfindungsgemässe zweikomponentige Siliconzusammensetzung so eingesetzt, dass das Gewichtsverhältnis der Komponente **A** zu Komponente **B** ≥ 1:1, insbesondere von 3:1 bis 15:1, bevorzugt von 10:1 bis 13:1, beträgt.

Ein Vorteil des Einsatzes der Komponenten **A** und **B** im beschriebenen, bevorzugten Gewichtsverhältnis ist, dass bestehende Anlagen zur Förderung und Applikation von zweikomponentigen Siliconzusammensetzungen in dieser Art und Weise sehr weit verbreitet sind und eine Umrüstung der Anlagen auf die Applikation der Komponenten **A** und **B** im Gewichtsverhältnis von beispielsweise 1:1 auf Verbraucherseite mit hohem Aufwand verbunden wäre.

Weiterhin bevorzugt umfasst die Komponente **B** keine vernetzbaren Polydiorganosiloxane. Der Vorteil davon ist eine bessere Lagerstabilität der Komponente **B.**

Insbesondere Komponente **B** der vorhergehend beschriebenen zweikomponentigen Siliconzusammensetzung wird unter Ausschluss von Feuchtigkeit hergestellt und aufbewahrt. Getrennt voneinander sind die beiden Komponenten lagerstabil, das heisst, sie können unter Ausschluss von Feuchtigkeit in einer geeigneten Verpackung oder Anordnung, wie sie vorhergehend beschreiben wurde, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändern. Üblicherweise wird die Lagerstabilität über die Messung der Viskosität oder der Reaktivität über die Zeit ermittelt.

Bei der Applikation der zweikomponentigen Siliconzusammensetzung werden die Komponenten **A** und **B,** beispielsweise durch Rühren, Kneten Walzen oder dergleichen, insbesondere jedoch über einen Statikmischer, miteinander vermischt. Dabei kommen die Hydroxylgruppen des Hydroxylgruppen terminierten Polydiorganosiloxans **P** in Kontakt mit den hydrolysierbaren oder gegebenenfalls mit bereits hydrolysierten Gruppen des Vernetzers, wodurch es zur Aushärtung der Zusammensetzung durch Kondensationsreaktionen kommt. Der Kontakt der Siliconzusammensetzung mit Wasser, insbesondere in Form von Luftfeuchtigkeit, bei der Applikation kann die Vernetzung ebenfalls begünstigen, da durch Reaktion des Wassers mit den hydrolysierbaren Gruppen des Vernetzers Silanolgruppen gebildet werden, deren Reaktivität gegenüber den Hydroxylgruppen des Polydiorganosiloxans **P** erhöht ist. Die Aushärtung der zweikomponentigen Siliconzusammensetzung erfolgt insbesondere bei Raumtemperatur.

Bei der Vernetzung der zweikomponentigen Siliconzusammensetzung entstehen als Reaktionsprodukte der Kondensationsreaktion insbesondere auch Verbindungen der Formel HO-R^{a}, wobei R^{a} bereits vorhergehend beschrieben wurde. Bevorzugt handelt es sich bei diesen Nebenprodukten der Kondensationsreaktion um Verbindungen, welche weder die Zusammensetzung noch das Substrat, auf dem die Zusammensetzung appliziert wird beeinträchtigen. Meist bevorzugt handelt es sich beim Reaktionsprodukt der Formel HO-R^{a} um eine Verbindung, welche sich leicht aus der vernetzenden oder der bereits vernetzten Zusammensetzung verflüchtigt.

Weiterhin betrifft die Erfindung eine gehärtete Siliconzusammensetzung wie sie erhältlich ist aus einer vorhergehend beschriebenen zweikomponentigen Siliconzusammensetzung durch Mischen der Komponente **A** mit der Komponente **B.**

Weiterhin betrifft die Erfindung die Verwendung von zweikomponentigen Siliconzusammensetzungen, wie sie vorhergehend beschrieben sind, als Klebstoff, Dichtstoff, als Beschichtung oder als Gussmasse. Bevorzugt wird die erfindungsgemässe Zusammensetzung als Klebstoff verwendet.

Die erfindungsgemässe zweikomponentige Siliconzusammensetzung wird insbesondere verwendet in einem Verfahren des Verklebens zweier Substrate **S1** und **S2** umfassend die Schritte
a) Applikation einer zweikomponentigen Siliconzusammensetzung gemäss vorhergehender Beschreibung auf ein Substrat **S1** und/oder ein Substrat **S2;**
b) Kontaktieren der Substrate **S1** und **S2** über die applizierte Zusammensetzung innerhalb der Offenzeit der Zusammensetzung;
c) Aushärtung der Zusammensetzung durch Reaktion der Komponenten **A** und **B;**
wobei die Substrate **S1** und **S2** gleich oder verschieden voneinander sind.

Bevorzugt wird die erfindungsgemässe Zusammensetzung auch verwendet in einem Verfahren der Abdichtung oder des Beschichtens umfassend die Schritte
a') Applikation einer zweikomponentigen Siliconzusammensetzung gemäss vorhergehender Beschreibung auf ein Substrat **S1** und/oder zwischen zwei Substrate **S1** und **S2;**
b') Aushärtung der Zusammensetzung durch Reaktion der Komponenten **A** und **B;**
wobei die Substrate **S1** und **S2** gleich oder verschieden voneinander sind.

Es ist dem Fachmann selbstverständlich klar, dass unmittelbar vor oder während der Applikation der zweikomponentigen Zusammensetzung die beiden Komponenten **A** und **B** miteinander vermischt werden müssen.

Die erfindungsgemässe zweikomponentige Siliconzusammensetzung weist bevorzugt eine pastöse Konsistenz mit strukturviskosen Eigenschaften auf. Eine solche Zusammensetzung wird mit einer geeigneten Vorrichtung auf das Substrat aufgetragen, bevorzugt in Form einer Raupe, wobei diese vorteilhaft eine im Wesentlichen runde oder dreieckige Querschnittsfläche aufweist.

Eine erfindungsgemässe Zusammensetzung mit guten Applikationseigenschaften weist eine hohe Standfestigkeit und einen kurzen Fadenzug auf. Das heisst, sie bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Als Substrate **S1** und/oder **S2** eignen sich insbesondere Substrate, welche ausgewählt sind aus der Gruppe bestehend aus Beton, Mörtel, Backstein, Ziegel, Keramik, Gips, Naturstein wie Granit oder Marmor, Glas, Glaskeramik, Metall oder Metalllegierung wie Aluminium, Stahl, Buntmetall, verzinktes Metall, Holz, Kunststoff wie PVC, Polycarbonat, Polymethyl(meth)acrylat, Polyester, Epoxidharz, Farbe und Lack.

Die zweikomponentige Siliconzusammensetzung findet insbesondere in der industriellen Fertigung, insbesondere von Fahrzeugen und Gebrauchsgegenständen des täglichen Gebrauchs, sowie im Bauwesen, insbesondere im Tief- und Hochbau, Anwendung. Bevorzugt wird die zweikomponentige Siliconzusammensetzung im Fensterbau verwendet.

Weiterhin betrifft die Erfindung einen Artikel, welcher eine zumindest teilweise gehärtete Siliconzusammensetzung gemäss vorhergehender Beschreibung aufweist, wobei es sich bei diesem Artikel insbesondere um ein Bauwerk, ein Industriegut oder ein Transportmittel, insbesondere ein Gebäude, oder ein Teil davon handelt.

Eine beispielhafte Aufzählung derartiger Artikel sind Häuser, Glasfassaden, Fenster, Bäder, Badezimmer, Küchen, Dächer, Brücken, Tunnels, Strassen, Automobile, Lastkraftwagen, Schienenfahrzeuge, Busse, Schiffe, Spiegel, Scheiben, Wannen, Weisswaren, Haushaltsapparate, Geschirrspüler, Waschmaschinen, Backofen, Schienwerfer, Nebelleuchter oder Solarpanels.

Weiterhin betrifft die vorliegende Erfindung ein Verfahren zur Einstellung der Topfzeit bei gleichbleibenden mechanischen Eigenschaften nach Aushärtung von einer zweikomponentigen Siliconzusammensetzung wie vorgängig beschreiben, dadurch gekennzeichnet, dass das Mischverhältnis von Komponente **A** zu Komponente **B** bezüglich Gewicht im Bereich von Komponente **A** zu Komponente **B** von 1:1 bis 25:1, insbesondere von 5:1 bis 20:1, bevorzugt von 7:1 bis 16:1 beliebig ausgewählt wird.

Mit Hilfe dieses Verfahrens ist es möglich, die Topfzeit einer erfindungsgemässen zweikomponentigen Siliconzusammensetzung innerhalb breiter Grenzen allein durch das Mischverhältnis der beiden Komponenten **A** und **B** einzustellen. Nach Ende der eingestellten Topfzeit härtet die Zusammensetzung aussergewöhnlich rasch und sehr gleichmässig aus. Unabhängig vom gewählten Mischverhältnis sind die Endeigenschaften, insbesondere Mechanik, der ausgehärteten Zusammensetzung weitgehend gleich. Dies ist äusserst vorteilhaft und erlaubt es einem Anwender, eine flexible, aber sehr genau kontrollierbare Topfzeit einzustellen und zu variieren, ohne die Komponenten **A** und **B** der Zusammensetzung auswechseln zu müssen und allein durch das Einstellen des Mischverhältnisses, z.B. durch veränderte Förderleistung in einer Pumpe.

Somit kann eine Optimierung der Taktzeiten auch bei variierenden Prozessbedingungen eingehalten werden, ohne das Siliconmaterial wechseln zu müssen.

Die erfindungsgemässe Zusammensetzung härtet nach Ende der Topfzeit aussergewöhnlich rasch aus. Dabei ist in bevorzugten Ausführungsformen der erfindungsgmässen Siliconzusammensetzung das Verhältnis von Topfzeit zu Klebefreiheit (Zeit, bis die Oberfläche der applizierten Siliconzusammensetzung durch weit fortgeschrittene Aushärtung klebefrei geworden ist) < 2.5, insbesondere zwischen 1.1 und 2.3, bevorzugt zwischen 1.2 und 2.1. Dies ermöglicht eine sehr effiziente Prozessführung, da die Zusammensetzung nach Applikation extrem rasch aushärtet und das Substrat, auf dem die Zusammensetzung appliziert worden ist, sofort weiterverarbeitet oder transportiert werden kann.

Zweikomponentige Siliconzusammensetzungen des Standes der Technik weisen dagegen üblicherweise entweder eine sehr lange Topfzeit und gleichzeitig eine sehr lange Aushärtezeit auf, oder aber eine sehr rasche Aushärtung und dafür eine extrem kurze, anwenderunfreundliche Topfzeit. Die vorliegende Erfindung erlaubt es, je nach Bedürfnis lange oder kurze Topfzeiten einzustellen; sie erlauben aber in jedem Fall eine sehr rasche Aushärtung nach der Applikation.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Herstellung der Siliconzusammensetzungen

Es wurden die folgenden Zusammensetzungen hergestellt:
Als Komponenten **A** und **B** wurden die in den Tabellen 1 und 2 aufgeführten Bestandteile in den angegebenen Gewichtsprozenten in einem Dissolver bei Raumtemperatur unter Inertatmosphäre miteinander vermischt und eingerührt, bis eine makroskopisch homogene Paste erhalten wurde.

Die hergestellten Komponenten **A** und **B** wurden in die getrennten Kammern von Doppelkartuschen eingefüllt und die Kartuschen wurden verschlossen. Bei der Applikation wurden die Komponenten **A** und **B** mittels Statikmischer vermischt.

### Beschreibung der Prüfmethoden

Die **Viskosität** wurde mittels Rheometer (Anton Paar Physica MCR 101 in einem Platte - Platte Messaufbau, 25 mm Durchmesser der Platte) bestimmt nach DIN 53018.

Die **Klebefreiheit** der Zusammensetzung wurde dadurch gemessen, dass die zuvor in verschlossenen Kartusche während 24 Stunden bei 23°C konditionierten Komponenten A und B in einem Gewichtsverhältnis von wie in der Tabelle angegeben über einen Taumelmischer miteinander vermischt wurden. Anschliessend wurde die gemischte Masse auf das Rheometer aufgebracht, auf 0.5 mm gepresst und unter einer konstanten Frequenz (0.08 1/s) geschert. Der Anstieg in der Viskosität wurde gegen die Zeit aufgetragen und bis zu einem Maximalwert von 90'000 Pa·s gemessen. Das Erreichen der Viskosität von 90'000 Pa·s steht in guter Korrelation zur manuell am Mischgut bestimmten Klebefreiheit und wird daher als systematisch erfasster Wert für die **Klebefreiheit** aufgefasst.

Zur Bestimmung der **Topfzeit** (auch Offenzeit) der Zusammensetzung wurde analog zu Bestimmung der Klebefreiheit ein Mischgut vorbereitet. Es wurde ein Holzspatel in die Masse eingebracht. Im Minutentakt wurde mit Hilfe des Spatels bestimmt, ob die gemischte Masse weiterhin pastösen Charakter aufweist. Sobald die Masse teilweise elastisches Verhalten zeigt, gilt die Topfzeit als erreicht.

Die **Zugscherfestigkeit und die Dehnung bei maximaler Scherkraft** wurden gemäss DIN EN 1465 gemessen an Filmen mit einer Schichtdicke von 2 mm, welche 7 Tage bei 23°C, 50 % relativer Luftfeuchtigkeit gelagert wurden, mit einer Messgeschwindigkeit von 20 mm/min auf einer Zugmaschine Zwick/Roell Z005 gemessen. Die angegebenen Werte sind die Mittelwerte von drei Messungen.

Die **Shore A-Härte** wurde bestimmt nach DIN 53505 nach einer Lagerung der ausgehärteten Zusammensetzung bei 23°C und 50% relativer Luftfeuchtigkeit während 7 Tagen.

Die Methode zur Bestimmung des **Weiterreisswiderstandes** (TPR) sowie die Herstellung der dazu benötigten Probekörper ist beschrieben in der DIN ISO 34-1. Gemessen wurde an Prüfkörpern vom Typ C.

Die Methode zur Bestimmung der **Dehnung bei maximaler Zugkraft,** der **Kraft bei 100% Dehnung** sowie der **Zugfestigkeit** sowie die Herstellung der dazu benötigten Probekörper ist beschrieben in ISO 527. Gemessen wurde bei 23°C und 50% relativer Luftfeuchtigkeit an einem Prüfkörper Typ 5A (ISO 527-2) und mit einer Zuggeschwindigkeit von 200 mm/min.

### Herstellung Vernetzer V2b

88.6 g 3-Aminopropyltriethoxysilan (Dynasylan^{®} AMEO, Evonik) wurden mit 111.4 g 3-Glycidoxypropyltriethoxysilan (Dynasylan^{®} GLYEO, Evonik) in einem Glasgefäss unter Stickstoffatmosphäre vermischt. Das Gefäss wurde verschlossen und während 7 Tagen bei 50 °C belassen. Die resultierende Mischung, die frei von detektierbaren Epoxygruppen war, wurde ohne Aufbereitung als Organosilan **V2b** eingesetzt.

**Tabelle 1 Zweikomponentige Siliconzusammensetzungen 1 bis 6.**

| ***Zusammensetzung*** | | ***1** Ref* | ***2*** | ***3*** | ***4*** | ***5*** | ***6*** |
|---|---|---|---|---|---|---|---|
| **A** | OH-term. PDMS ^{a} (Viskosität (23°C) 20'000 mPa·s) (Polymer **P2**) | 38.3 | 38.3 | 38.3 | 38.3 | 44.3 | 33.0 |
| | OH-term. PDMS ^{a} (Viskosität (23°C) 6'000 mPa·s) (Polymer **P3**) | 4.0 | 4.0 | 4.0 | 4.0 | 4.0 | 5.0 |
| | OH-term. PDMS ^{a} (Viskosität (25°C) 100 mPa·s) (Polymer **P3**) | 2.0 | 2.0 | 2.0 | 2.0 | - | 2.0 |
| | Weichmacher (Wacker^{®} AK 10) | 6.0 | 6.0 | 6.0 | 6.0 | 6.0 | - |
| | Weichmacher (Wacker^{®} AK 100) | - | - | - | - | - | 7.0 |
| | Polypropylenglykol Dispersionsadditiv | 1.0 | 1.0 | 1.0 | 1.0 | 1.0 | 1.0 |
| | Siliconöl in Wasser Emulsion (50% H₂O) | 0.3 | 0.3 | 0.3 | 0.3 | 0.3 | 1.0 |
| | Hakuenka^{®} CCR-S (hydrophobisierte Fällungskreide) | 19.0 | 19.0 | 19.0 | 19.0 | 19.0 | 38.0 |
| | Imercarb^{®} 74S (gemahlene Kreide) | 28.0 | 28.0 | 28.0 | 28.0 | 28.0 | 10.0 |
| | Aerosil^{®} R972 (hydrophobe pyrogene Kieselsäure) | 1.5 | 1.5 | 1.5 | 1.5 | 1.5 | 1.5 |
| | Pigment | - | - | - | - | - | 3.0 |
| **B** | Vinyl terminiertes PDMS ^{b} (Weichmacher) | 38.6 | 40.75 | 46.0 | 44.0 | 40.75 | 46.0 |
| | Dynasylan^{®} 1122 (Vernetzer **V2a**) | - | 20.0 | 42.0 | - | 20.0 | 9.0 |
| | Vernetzer **V2b** (s. Herstellvorschrift) | - | 20.0 | - | 42.0 | 20.0 | 10.0 |
| | Geniosil^{®} GF 96 (Amino-trimethoxysilan) | 19.95 | - | - | - | - | - |
| | Geniosil^{®} GF 80 (Epoxy-trimethoxysilan) | 10.0 | - | - | - | - | - |
| | Wacker^{®} Silane M1 Trimethoxy (Methyltrimethoxysilan) (Vernetzer **V3**) | 9.0 | - | - | - | - | - |
| | Wacker^{®} Coss-linker ET15 (Vernetzer **V1**) | - | - | - | - | - | 19.0 |
| | Vinyltriethoxysilan (Vernetzer **V3**) | - | - | - | - | - | 7.0 |
| | Monarch^{®} 570 (Russ) | 15.8 | 15.8 | - | - | 15.8 | - |
| | Aerosil^{®} R972 (hydrophobe pyrogene Kieselsäure) | 5.6 | 3.0 | 11.0 | 11.0 | 3.0 | 8.0 |
| | Katalysator ^{c} | 0.45 | 0.45 | 1.0 | 3.0 | 0.45 | 1.0 |

| | | | | | | | |
|---|---|---|---|---|---|---|---|
| ^{a} OH-term. PDMS: OH-Gruppen terminiertes Polydimethylsiloxan; ^{b} Vinyl term. PDMS: Vinylgruppen terminiertes Polydimethylsiloxan mit einer Viskosität nach DIN 53018 von 20'000 mPa·s; ^{c} zinnorganische Verbindung (Dioctylzinndilaurat). | | | | | | | |

### Topfzeit und Klebefreiheit (Aushärtezeit)

Tabelle 2 zeigt, dass die erfindungsgemässen Zusammensetzungen ein sehr niedriges Verhältnis von Topfzeit zu Klebefreiheit aufweisen und somit nach Ende der Topfzeit extrem rasch aushärten.

**Tabelle 2: Messdaten zu Topfzeit und Klebefreiheit der Zusammensetzungen 1 bis 3. Das Mischverhältnis Komponente A zu Komponente B betrug immer 13:1 (w/w).**

| ***Zusammensetzung*** | ***1** Ref* | ***2*** | ***3*** | ***4*** | ***5*** |
|---|---|---|---|---|---|
| Topfzeit | 29 min | 33 min | 21 min | 125 min | 94 min |
| Klebefreiheit (Zeit bis weitgehend ausgehärtet) | 84 min | 42 min | 25 min | 153 min | 131 min |
| Verhältnis Klebefreiheit : Topfzeit | 2.9 | 1.3 | 1.2 | 1.2 | 1.4 |

### Mechanische Eigenschaften und Mischverhältnis

Tabelle 3 zeigt, dass durch das Ändern des Mischverhältnisses (Gewicht) die Topfzeit eingestellt werden kann. Die mechanischen Eigenschaften nach Aushärtung bleiben davon jedoch praktisch unberührt.

**Tabelle 3: Messdaten der Zusammensetzung 6 bei verschiedenen Mischverhältnissen Komponente A : Komponente B. n/m bedeutet, dass der Wert nicht gemessen wurde.**

| ***Zusammensetzung*** | ***6*** | | | |
|---|---|---|---|---|
| Mischverhältnis **A:B** (w/w) | 7:1 | 10:1 | 13:1 | 16:1 |
| Topfzeit [min] | 4 | 7 | 11 | 16 |
| Klebefreiheit [min] | n/m | n/m | 22 | n/m |
| Shore A Härte (7d NK) | 48 | 43 | 49 | 45 |
| Zugscherfestigkeit (7d NK) [MPa] | 1.4 | 1.3 | 1.3 | 1.3 |
| Dehnung bei maximaler Scherkraft [%] | 230 | 220 | 200 | 250 |

**Tabelle 4: Zweikomponentige Siliconzusammensetzungen 7 bis 9.**

| ***Zusammensetzung*** | | ***7** Ref* | ***8*** | ***9*** |
|---|---|---|---|---|
| **A** | OH-term. PDMS ^{a} (Viskosität (23°C) 20'000 mPa·s) (Polymer **P2**) | 33.9 | 33.5 | 33.2 |
| | OH-term. PDMS ^{a} (Viskosität (23°C) 6'000 mPa·s) (Polymer **P3**) | 5.1 | 5.1 | 5.0 |
| | OH-term. PDMS ^{a} (Viskosität (25°C) 100 mPa·s) (Polymer **P3**) | 2.0 | 2.0 | 2.0 |
| | Weichmacher (Wacker^{®} AK 100) | 7.2 | 7.1 | 7.0 |
| | Polypropylenglykol Dispersionsadditiv | 1.0 | 1.0 | 1.0 |
| | Siliconöl in Wasser Emulsion (50% H₂O) | - | 1.0 | 2.0 |
| | Hakuenka^{®} CCR-S (hydrophobisierte Fällungskreide) | 39.0 | 38.6 | 38.2 |
| | Imercarb^{®} 74S (gemahlene Kreide) | 10.3 | 10.2 | 10.1 |
| | Aerosil^{®} R972 (hydrophobe pyrogene Kieselsäure) | 1.5 | 1.5 | 1.5 |
| **B** | Vinyl terminiertes PDMS ^{b} (Weichmacher) | 46.0 | 46.0 | 46.0 |
| | Dynasylan^{®} 1122 (Vernetzer **V2a**) | 9.0 | 9.0 | 9.0 |
| | Vernetzer **V2b** (s. Herstellvorschrift) | 10.0 | 10.0 | 10.0 |
| | Geniosil^{®} GF 96 (Amino-trimethoxysilan) | - | - | - |
| | Geniosil^{®} GF 80 (Epoxy-trimethoxysilan) | - | - | - |
| | Wacker^{®} Silane M1 Trimethoxy (Methyltrimethoxysilan) (Vernetzer **V3**) | - | - | - |
| | Wacker^{®} Coss-linker ET15 (Vernetzer **V1**) | 19.0 | 19.0 | 19.0 |
| | Vinyltriethoxysilan (Vernetzer **V3**) | 7.0 | 7.0 | 7.0 |
| | Monarch^{®} 570 (Russ) | - | - | - |
| | Aerosil^{®} R972 (hydrophobe pyrogene Kieselsäure) | 8.0 | 8.0 | 8.0 |
| | Katalysator ^{c} | 1.0 | 1.0 | 1.0 |

| | | | | |
|---|---|---|---|---|
| ^{a} OH-term. PDMS: OH-Gruppen terminiertes Polydimethylsiloxan; ^{b} Vinyl term. PDMS: Vinylgruppen terminiertes Polydimethylsiloxan mit einer Viskosität nach DIN 53018 von 20'000 mPa·s; ^{c} zinnorganische Verbindung (Dioctylzinndilaurat). | | | | |

### Einfluss der Wassermenge

Um den Einfluss der Menge an Wasser in Komponente **B** zu studieren, wurden Versuche 7 bis 9 durchgeführt. Die Mischungen wurden analog zu en vorhergehenden Versuchen 1-9 formuliert und appliziert. Die Zusammensetzungen der Versuche 7 bis 9 sind in Tabelle 4 dargestellt. Die Testergebnisse sind in Tabelle 5 ersichtlich.

**Tabelle 5: Messdaten zu Topfzeit und mechanischen Eigenschaften der Zusammensetzungen 7 bis 9. Das Mischverhältnis Komponente A zu Komponente B betrug immer 13:1 (w/w).**

| ***Zusammensetzung*** | ***7** Ref* | ***8*** | ***9*** |
|---|---|---|---|
| Topfzeit [min] | 18 | 9 | 8.5 |
| Zugscherfestigkeit (7d NK) [MPa] | 1.28 | 1.49 | 1.52 |
| Dehnung bei maximaler Scherkraft [%] | 198 | 228 | 231 |
| Zugfestigkeit (7d RT) [MPa] | 2.05 | 2.42 | 2.22 |
| Kraft bei 100 % Dehnung [MPa] | 1.3 | 1.73 | 1.64 |
| Dehnung bei maximaler Zugkraft [%] | 229 | 176 | 169 |
| Shore A Härte (7d RT) | 43 | 48 | 52 |
| Weitreisswiderstand [N/mm] | 2.84 | 3.47 | 3.65 |

Die Daten aus Tabelle 5 zeigen, dass ohne erfindungsgemäss enthaltenes Wasser zwar eine Aushärtung stattfindet, aber dabei sowohl die Topfzeit deutlich länger wird als auch überraschenderweise die mechanischen Daten im Referenzbeispiel 7 deutlich schlechter sind.

## Patentansprüche

1. Zweikomponentige Siliconzusammensetzung, bestehend aus einer Komponente **A** umfassend
i) mindestens ein Hydroxylgruppen terminiertes Polydiorganosiloxan **P;**
ii) zwischen 0.05 und 5.0 Gew.-% Wasser, bezogen auf Komponente **A;**
und einer Komponente **B** umfassend
i) mindestens ein nicht kondensierbares Polydiorganosiloxan als Weichmacher;
ii) mindestens einen Katalysator **K** für die Vernetzung von Polydiorganosiloxanen;
iii) zwischen 0 und 50 Gew.-%, bezogen auf Komponente **B,** mindestens eines ersten Organosilans **V1** nach Formel (I), 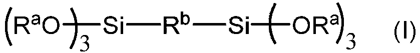
iv) zwischen 2 und 60 Gew.-% , bezogen auf Komponente **B,** mindestens eines zweiten Organosilans **V2** nach Formel (II), 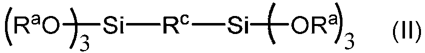
v) bis zu 25 Gew.-%, bezogen auf Komponente **B,** weitere Organosilane **V3** mit hydrolysierbaren Alkxoysilangruppen Si-OR^{a}, welche nicht unter die Formeln (I) und (II) fallen,
wobei R^{a} für ein Wasserstoffatom oder einen monovalenten, linearen oder verzweigten Alkylrest mit 1 bis 6 Kohlenstoffatomen steht,
R^{b} für einen divalenten, linearen oder verzweigten Alkylrest oder Alkenylrest mit 2 bis 20 Kohlenstoffatomen steht, und
R^{c} für einen divalenten, linearen oder verzweigten Alkylrest mit 2 bis 20 Kohlenstoffatomen steht, der mindestens eine sekundäre Aminogruppe enthält;
mit der Massgabe, dass die Zusammensetzung weniger als 10 mol-%, bezogen auf die Menge an Organosilan **V2,** an Organosilanen mit Epoxygruppen enthält.

2. Zweikomponentige Siliconzusammensetzung gemäss Anspruch 1, **dadurch gekennzeichnet, dass** das Hydroxylgruppen terminierte Polydiorganosiloxan **P** ein Polydiorganosiloxan **P'** der Formel (I) ist 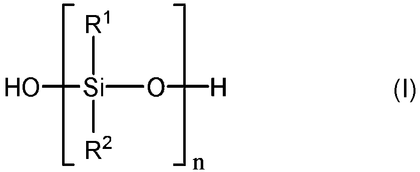 wobei
die Reste R¹ und R² unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen; und
n so gewählt ist, dass das Gewichtsmittel des Molekulargewichts M_{w} des Polydiorganosiloxans **P'**, bestimmt mittels GPC relativ zu Polystyrol, 500 bis 250'000 g/mol beträgt.

3. Zweikomponentige Siliconzusammensetzung gemäss Anspruch 2,
**dadurch gekennzeichnet, dass** das Hydroxylgruppen terminierte Polydiorganosiloxan **P'**
ein Polydiorganosiloxan **P1** der Formel (I) ist, wobei n so gewählt ist, dass
das Gewichtsmittel des Molekulargewichts M_{w} des Polydiorganosiloxans **P1**, bestimmt mittels GPC relativ zu Polystyrol, 30'000 bis 80'000 g/mol beträgt; oder
dass als Polydiorganosiloxan **P'** eine Mischung eingesetzt wird von
i") mindestens einem Hydroxylgruppen terminierten Polydiorganosiloxan **P2** der Formel (I), wobei n so gewählt ist, dass das Gewichtsmittel des Molekulargewichts M_{w} des Polydiorganosiloxans **P2**, bestimmt mittels GPC relativ zu Polystyrol, > 80'000 bis 250'000 g/mol beträgt; sowie
ii") mindestens einem Hydroxylgruppen terminierten Polydiorganosiloxan **P3** der Formel (I), wobei n so gewählt ist, dass das Gewichtsmittel des Molekulargewichts M_{w} des Polydiorganosiloxans **P3**, bestimmt mittels GPC relativ zu Polystyrol, 500 bis ≤ 80'000 g/mol, beträgt.

4. Zweikomponentige Siliconzusammensetzung gemäss einem der Ansprüche 2 und 3, **dadurch gekennzeichnet, dass** die Reste R¹ und R² für Alkylreste mit 1 bis 5, insbesondere mit 1 bis 3, C-Atomen, bevorzugt für Methylgruppen, stehen.

5. Zweikomponentige Siliconzusammensetzung gemäss einem der vorhergehenden Ansprüche, **dadurch gekennzeichnet, dass** Organosilan **V3** ein Silan der Formel (III) ist 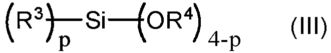
wobei der Rest R³ unabhängig voneinander für einen linearen oder verzweigten, einwertigen Kohlenwasserstoffrest mit 1 bis 12 C-Atomen steht, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist; der Rest R⁴ für einen Rest R^{a} steht; und
p für einen Wert von 0 bis 4 steht, mit der Massgabe, dass falls p für einen Wert von 3 oder 4 steht, mindestens p-2 Reste R³ jeweils mindestens eine mit den Hydroxylgruppen des Polydiorganosiloxans **P** reaktive, insbesondere kondensierbare, Gruppe aufweisen.

6. Zweikomponentige Siliconzusammensetzung gemäss einem der vorhergehenden Ansprüche, **dadurch gekennzeichnet, dass** der Rest R^{a} in allen Organosilanen **V1, V2** und **V3** für einen Alkylrest mit 1 bis 5, insbesondere 1 bis 3, C-Atomen, bevorzugt für eine Methyl- oder für eine Ethylgruppe, insbesondere eine Ethylgruppe, steht, wobei Teile dieser Reste R^{a} nach Hydrolyse von Si-OR^{a} Gruppen durch Wasserstoffatome ersetzt sein können.

7. Zweikomponentige Siliconzusammensetzung gemäss einem der vorhergehenden Ansprüche, **dadurch gekennzeichnet, dass** der Katalysator **K** eine zinnorganische Verbindung ist.

8. Zweikomponentige Siliconzusammensetzung gemäss einem der vorhergehenden Ansprüche, **dadurch gekennzeichnet, dass** das Organosilan **V2** mindestens ein Organosilan nach Formel (IIa) ist, 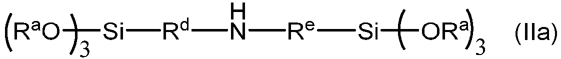
wobei R^{d} für einen divalenten, linearen oder verzweigten Alkylrest mit 2 bis 10 Kohlenstoffatomen steht, der optional eine Hydroxylgruppe sowie einen Ethersauerstoff enthält, und
R^{e} für einen divalenten, linearen oder verzweigten Alkylrest mit 2 bis 10 Kohlenstoffatomen steht.

9. Zweikomponentige Siliconzusammensetzung gemäss Anspruch 8, **dadurch gekennzeichnet, dass** das Organosilan **V2** entweder
- ein Organosilan **V2a** darstellt, bei dem die Reste R^{d} und R^{e} in Formel (IIa) beide für einen divalenten, linearen oder verzweigten Alkylrest mit 2 bis 10 Kohlenstoffatomen stehen, insbesondere einen Propylrest; oder
- ein Organosilan **V2b** darstellt, bei dem Rest R^{e} in Formel (IIa) für einen divalenten, linearen oder verzweigten Alkylrest mit 2 bis 10 Kohlenstoffatomen steht, insbesondere einen Propylrest, und Rest R^{d} einen divalenten, linearen oder verzweigten Alkylrest mit 2 bis 10 Kohlenstoffatomen, insbesondere einen Propylrest, enthält sowie zusätzlich eines der beiden Strukturelemente enthält, die in Formel (IIb) dargestellt sind; oder 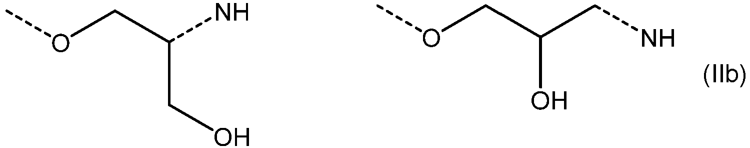
- eine Mischung aus einem Organosilan **V2a** und einem Organosilan **V2b** darstellen, wobei die genannten Organosilane **V2a** und **V2b** bevorzugt in einem Gewichtsverhältnis von zwischen 1:2 und 2:1 in der Komponente B enthalten sind.

10. Zweikomponentige Siliconzusammensetzung gemäss Anspruch 9,
**dadurch gekennzeichnet, dass** Organosilan **V2** ein Organosilan **V2a** umfasst oder daraus besteht und dass der Katalysator **K** in einer Menge von zwischen 0.1 Gew.-% und 2 Gew.-%, bevorzugt zwischen 0.2 Gew.- % und 1 Gew.-%, bezogen auf Komponente **B,** in der Komponente **B** enthalten ist.

11. Zweikomponentige Siliconzusammensetzung gemäss Anspruch 9,
**dadurch gekennzeichnet, dass** Organosilan **V2** aus einem Organosilan **V2b** besteht und dass der Katalysator **K** in einer Menge von zwischen 1 Gew.-% und 4 Gew.-%, bevorzugt zwischen 1.5 Gew.-% und 3.5 Gew.- %, bezogen auf Komponente **B,** in der Komponente **B** enthalten ist.

12. Zweikomponentige Siliconzusammensetzung gemäss einem der vorhergehenden Ansprüche, **dadurch gekennzeichnet, dass** das Gewichtsverhältnis von Komponente **A** zu Komponente **B** ≥ 1:1, insbesondere von 5:1 bis 20:1, bevorzugt von 7:1 bis 16:1, beträgt.

13. Verwendung einer zweikomponentigen Siliconzusammensetzung gemäss einem der Ansprüche 1 bis 12 als Klebstoff, Dichtstoff, Beschichtung oder als Gussmasse.

14. Gehärtete Siliconzusammensetzung, **dadurch gekennzeichnet, dass** sie erhältlich ist aus einer zweikomponentigen Siliconzusammensetzung gemäss einem der Ansprüche 1 bis 12 durch Mischen der Komponente **A** mit der Komponente **B.**

15. Verfahren zur Einstellung der Topfzeit bei gleichbleibenden mechanischen Eigenschaften nach Aushärtung von einer zweikomponentigen Siliconzusammensetzung nach einem der Ansprüche 1 bis 12, **dadurch gekennzeichnet, dass** das Mischverhältnis von Komponente **A** zu Komponente **B** bezüglich Gewicht im Bereich von Komponente **A** zu Komponente **B** von 1:1 bis 25:1, insbesondere von 5:1 bis 20:1, bevorzugt von 7:1 bis 16:1 beliebig ausgewählt wird.

## Claims

1. Two-component silicone composition consisting of a component A comprising
i) at least one hydroxyl group-terminated polydiorganosiloxane P;
ii) between 0.05% and 5.0% by weight of water, based on component A;
and a component B comprising
i) at least one noncondensable polydiorganosiloxane as plasticizer;
ii) at least one catalyst K for the crosslinking of polydiorganosiloxanes;
iii) between 0% and 50% by weight, based on component B, of at least one first organosilane V1 of formula (I) 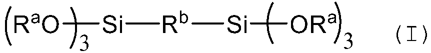
iv) between 2% and 60% by weight, based on component B, of at least one second organosilane V2 of formula (II) 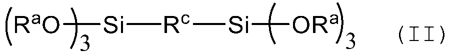
v) up to 25% by weight, based on component B, of further organosilanes V3 having hydrolysable alkoxysilane groups Si-OR^{a} that are not covered by the formulae (I) and (II), where R^{a} is a hydrogen atom or a monovalent linear or branched alkyl radical having 1 to 6 carbon atoms,
R^{d} is a divalent linear or branched alkyl radical or alkenyl radical having 2 to 20 carbon atoms, and
R^{c} is a divalent linear or branched alkyl radical which has 2 to 20 carbon atoms and contains at least one secondary amino group;
with the proviso that the composition contains less than 10 mol%, based on the amount of organosilane V2, of organosilanes having epoxy groups.

2. Two-component silicone composition according to Claim 1, **characterized in that** the hydroxyl group-terminated polydiorganosiloxane P is a polydiorganosiloxane P' of the formula (I) 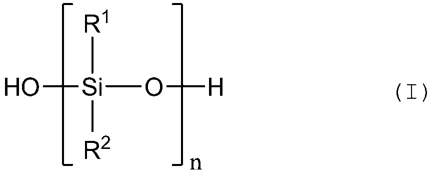 where
the R¹ and R² radicals are independently linear or branched, monovalent hydrocarbyl radicals which have 1 to 12 carbon atoms and optionally include one or more heteroatoms, and optionally one or more C-C multiple bonds and/or optionally cycloaliphatic and/or aromatic components; and
n is chosen such that the weight-average molecular weight M_{w} of the polydiorganosiloxane P', determined by means of GPC relative to polystyrene, is 500 to 250'000 g/mol.

3. Two-component silicone composition according to Claim 2, **characterized in that** the hydroxyl group-terminated polydiorganosiloxane P'
is a polydiorganosiloxane P1 of the formula (I) where n is chosen such that the weight-average molecular weight M_{w} of the polydiorganosiloxane P1, determined by means of GPC relative to polystyrene, is 30'000 to 80'000 g/mol; or
**in that** the polydiorganosiloxane P' used is a mixture of i") at least one hydroxyl group-terminated polydiorganosiloxane P2 of the formula (I) where n is chosen such that the weight-average molecular weight M_{w} of the polydiorganosiloxane P2, determined by means of GPC relative to polystyrene, is > 80'000 to 250'000 g/mol; and
ii") at least one hydroxyl group-terminated polydiorganosiloxane P3 of the formula (I) where n is chosen such that the weight-average molecular weight M_{w} of the polydiorganosiloxane P3, determined by means of GPC relative to polystyrene, is 500 to ≤ 80'000 g/mol.

4. Two-component silicone composition according to either of Claims 2 and 3, **characterized in that** the R¹ and R² radicals are alkyl radicals having 1 to 5, especially having 1 to 3, carbon atoms, preferably methyl groups.

5. Two-component silicone composition according to any of the preceding claims, **characterized in that** organosilane V3 is a silane of the formula (III) 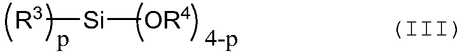
where the R³ radical is independently a linear or branched, monovalent hydrocarbyl radical which has 1 to 12 carbon atoms and optionally includes one or more heteroatoms, and optionally one or more C-C multiple bonds and/or optionally cycloaliphatic and/or aromatic components;
the R⁴ radical is an R^{a} radical; and
p has a value of 0 to 4, with the proviso that, if p has a value of 3 or 4, at least p-2 R³ radicals each have at least one group reactive, especially condensable, with the hydroxyl groups of the polydiorganosiloxane P.

6. Two-component silicone composition according to any of the preceding claims, **characterized in that** the R^{a} radical in all organosilanes V1, V2 and V3 is an alkyl radical having 1 to 5, especially 1 to 3, carbon atoms, preferably a methyl group or an ethyl group, especially an ethyl group, where portions of these R^{a} radicals after hydrolysis of Si-OR^{a} groups may be replaced by hydrogen atoms.

7. Two-component silicone composition according to any of the preceding claims, **characterized in that** the catalyst K is an organotin compound.

8. Two-component silicone composition according to any of the preceding claims, **characterized in that** the organosilane V2 is at least one organosilane of formula (IIa) 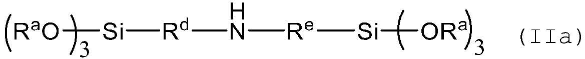
where R^{d} is a divalent linear or branched alkyl radical which has 2 to 10 carbon atoms and optionally contains a hydroxyl group and an ether oxygen, and
R^{e} is a divalent linear or branched alkyl radical having 2 to 10 carbon atoms.

9. Two-component silicone composition according to Claim 8, **characterized in that** the organosilane V2 is either
- an organosilane V2a in which the R^{d} and R^{e} radicals in formula (IIa) are both a divalent linear or branched alkyl radical having 2 to 10 carbon atoms, especially a propyl radical; or
- an organosilane V2b in which the R^{e} radical in formula (IIa) is a divalent linear or branched alkyl radical having 2 to 10 carbon atoms, especially a propyl radical, and the R^{d} radical is a divalent linear or branched alkyl radical having 2 to 10 carbon atoms, especially a propyl radical, and additionally one of the two structural elements shown in formula (IIb); or 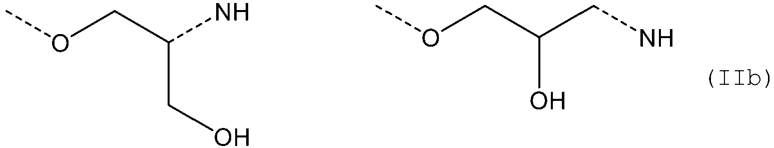
- a mixture of an organosilane V2a and an organosilane V2b, where the organosilanes V2a and V2b mentioned are preferably present in component B in a weight ratio of between 1:2 and 2:1.

10. Two-component silicone composition according to Claim 9, **characterized in that** organosilane V2 comprises or consists of an organosilane V2a, and **in that** the catalyst K is present in component B in an amount between 0.1% by weight and 2% by weight, preferably between 0.2% by weight and 1% by weight, based on component B.

11. Two-component silicone composition according to Claim 9, **characterized in that** organosilane V2 consists of an organosilane V2b, and **in that** the catalyst K is present in component B in an amount between 1% by weight and 4% by weight, preferably between 1.5% by weight and 3.5% by weight, based on component B.

12. Two-component silicone composition according to any of the preceding claims, **characterized in that** the weight ratio of component A to component B is ≥ 1:1, especially from 5:1 to 20:1, preferably from 7:1 to 16:1.

13. Use of a two-component silicone composition according to any of Claims 1 to 12 as adhesive, sealant, coating or as casting compound.

14. Cured silicone composition, **characterized in that** it is obtainable from a two-component silicone composition according to any of Claims 1 to 12 by mixing component A with component B.

15. Method of adjusting pot life with the same mechanical properties after curing of a two-component silicone composition according to any of Claims 1 to 12, **characterized in that** the mixing ratio of component A to component B based on weight is selected arbitrarily within the range of component A to component B from 1:1 to 25:1, especially from 5:1 to 20:1, preferably from 7:1 to 16:1.

## Revendications

1. Composition de silicone bicomposante, constituée d'un composant A comprenant
i) au moins un polydiorganosiloxane P terminé par des groupes hydroxyle ;
ii) entre 0,05 et 5,0 % en poids d'eau, par rapport au composant A ;
et un composant B comprenant
i) au moins un polydiorganosiloxane non condensable en tant que plastifiant ;
ii) au moins un catalyseur K pour la réticulation de polydiorganosiloxanes ;
iii) entre 0 et 50 % en poids, par rapport au composant B, d'au moins un premier organosilane V1 selon la formule (I), 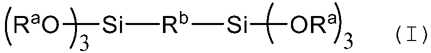
iv) entre 2 et 60 % en poids, par rapport au composant B, d'au moins un deuxième organosilane V2 selon la formule (II), 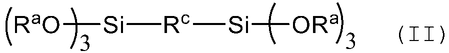
v) jusqu'à 25 % en poids, par rapport au composant B, d'autres organosilanes V3 comportant des groupes alkoxysilane hydrolysables Si-OR^{a}, qui ne relèvent pas des formules (I) et (II),
où R^{a} représente un atome d'hydrogène ou un radical alkyle monovalent, linéaire ou ramifié, comportant de 1 à 6 atomes de carbone,
R^{b} représente un radical alkyle ou un radical alcényle divalent, linéaire ou ramifié, comportant de 2 à 20 atomes de carbone, et
R^{c} représente un radical alkyle divalent, linéaire ou ramifié, comportant de 2 à 20 atomes de carbone, qui contient au moins un groupe amino secondaire ;
à la condition que la composition contienne moins de 10 % en moles, par rapport à la quantité d'organosilane V2, d'organosilanes comportant des groupes époxy.

2. Composition de silicone bicomposante selon la revendication 1, **caractérisée en ce que** le polydiorganosiloxane P terminé par des groupes hydroxyle est un polydiorganosiloxane P' de formule (I) 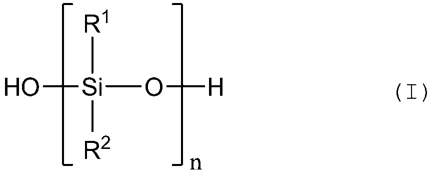 où
les radicaux R¹ et R² représentent indépendamment l'un de l'autre des radicaux hydrocarbonés monovalents, linéaires ou ramifiés, comportant de 1 à 12 atomes C, lesquels peuvent éventuellement comporter un ou plusieurs hétéroatomes, et éventuellement une ou plusieurs liaisons multiples C-C et/ou éventuellement des parties cycloaliphatiques et/ou aromatiques ; et
n est choisi de sorte que la masse moléculaire moyenne en poids M_{w} du polydiorganosiloxane P', déterminée par GPC par rapport au polystyrène, soit de 500 à 250 000 g/mol.

3. Composition de silicone bicomposante selon la revendication 2, **caractérisée en ce que** le polydiorganosiloxane P' terminé par des groupes hydroxyle est un polydiorganosiloxane P1 de formule (I), où n est choisi de sorte que la masse moléculaire moyenne en poids M_{w} du polydiorganosiloxane P1, déterminée par GPC par rapport au polystyrène, soit de 30 000 à 80 000 g/mol ; ou
**en ce qu'**en tant que polydiorganosiloxane P', on utilise un mélange de
i") au moins un polydiorganosiloxane P2 terminé par des groupes hydroxyle de formule (I), n étant choisi de sorte que la masse moléculaire moyenne en poids M_{w} du polydiorganosiloxane P2, déterminée par GPC par rapport au polystyrène, soit de > 80 000 à 250 000 g/mol ; ainsi que
ii") au moins un polydiorganosiloxane P3 terminé par des groupes hydroxyle de formule (I), n étant choisi de sorte que la masse moléculaire moyenne en poids M_{w} du polydiorganosiloxane P3, déterminée par GPC par rapport au polystyrène, soit de 500 à ≤ 80 000 g/mol.

4. Composition de silicone bicomposante selon l'une quelconque des revendications 2 et 3, **caractérisée en ce que** les radicaux R¹ et R² représentent des radicaux alkyle comportant de 1 à 5, en particulier de 1 à 3, atomes C, de manière préférée des groupes méthyle.

5. Composition de silicone bicomposante selon l'une quelconque des revendications précédentes, **caractérisée en ce que** l'organosilane V3 est un silane de formule (III) 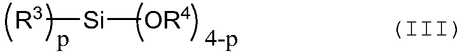
où le radical R³ représente indépendamment un radical hydrocarboné monovalent, linéaire ou ramifié, comportant de 1 à 12 atomes C, lequel peut éventuellement comporter un ou plusieurs hétéroatomes, et éventuellement une ou plusieurs liaisons multiples C-C et/ou éventuellement des parties cycloaliphatiques et/ou aromatiques ;
le radical R⁴ représente un radical R^{a} ; et
p représente une valeur de 0 à 4, à la condition que, lorsque p représente une valeur de 3 ou 4, au moins p-2 radicaux R³ présentent chacun au moins un groupe réactif avec les groupes hydroxyle du polydiorganosiloxane P, en particulier un groupe condensable.

6. Composition de silicone bicomposante selon l'une quelconque des revendications précédentes, **caractérisée en ce que** le radical R^{a} dans tous les organosilanes V1, V2 et V3 représente un radical alkyle comportant de 1 à 5, en particulier de 1 à 3, atomes C, de préférence un groupe méthyle ou un groupe éthyle, en particulier un groupe éthyle, des parties de ces radicaux R^{a} pouvant être remplacées par des atomes d'hydrogène après hydrolyse de groupes Si-OR^{a}.

7. Composition de silicone bicomposante selon l'une quelconque des revendications précédentes, **caractérisée en ce que** le catalyseur K est un composé organostannique.

8. Composition de silicone bicomposante selon l'une quelconque des revendications précédentes, **caractérisée en ce que** l'organosilane V2 est au moins un organosilane de formule (IIa), 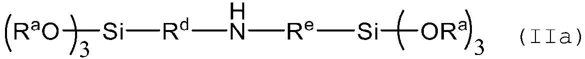
où R^{d} représente un radical alkyle divalent, linéaire ou ramifié, comportant de 2 à 10 atomes de carbone, qui contient éventuellement un groupe hydroxyle ainsi qu'un oxygène éther, et
R^{e} représente un radical alkyle divalent, linéaire ou ramifié, comportant de 2 à 10 atomes de carbone.

9. Composition de silicone bicomposante selon la revendication 8, **caractérisée en ce que** l'organosilane V2 soit
- représente un organosilane V2a, dans lequel les radicaux R^{d} et R^{e} dans la formule (IIa) représentent tous deux un radical alkyle divalent, linéaire ou ramifié, comportant de 2 à 10 atomes de carbone, en particulier un radical propyle ; soit
- représente un organosilane V2b, dans lequel le radical R^{e} dans la formule (IIa) représente un radical alkyle divalent, linéaire ou ramifié, comportant de 2 à 10 atomes de carbone, en particulier un radical propyle, et le radical R^{d} contient un radical alkyle divalent, linéaire ou ramifié, comportant de 2 à 10 atomes de carbone, en particulier un radical propyle, et contient en outre l'un des deux éléments structuraux représentés dans la formule (IIb) ; soit 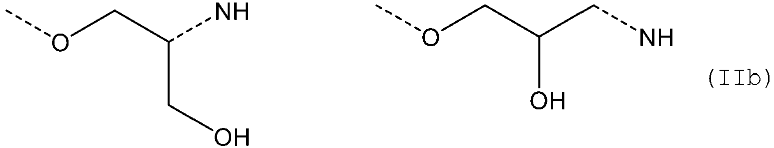
- représentent un mélange d'un organosilane V2a et d'un organosilane V2b, lesdits organosilanes V2a et V2b étant de manière préférée contenus dans le composant B dans un rapport en poids compris entre 1:2 et 2:1.

10. Composition de silicone bicomposante selon la revendication 9, **caractérisée en ce que** l'organosilane V2 comprend un organosilane V2a ou en est constitué et **en ce que** le catalyseur K est contenu dans le composant B en une quantité comprise entre 0,1 % en poids et 2 % en poids, de manière préférée entre 0,2 % en poids et 1 % en poids, par rapport au composant B.

11. Composition de silicone bicomposante selon la revendication 9, **caractérisée en ce que** l'organosilane V2 est constitué d'un organosilane V2b et **en ce que** le catalyseur K est contenu dans le composant B en une quantité comprise entre 1 % en poids et 4 % en poids, de manière préférée entre 1,5 % en poids et 3,5 % en poids, par rapport au composant B.

12. Composition de silicone bicomposante selon l'une quelconque des revendications précédentes, **caractérisée en ce que** le rapport en poids du composant A au composant B est ≥ 1:1, en particulier de 5:1 à 20:1, de préférence de 7:1 à 16:1.

13. Utilisation d'une composition de silicone bicomposante selon l'une quelconque des revendications 1 à 12 comme adhésif, mastic, revêtement ou comme masse de coulée.

14. Composition de silicone durcie, **caractérisée en ce qu'**elle est peut être obtenue à partir d'une composition de silicone bicomposante selon l'une quelconque des revendications 1 à 12 par mélange du composant A avec le composant B.

15. Procédé de réglage du temps de vie en pot avec maintien des propriétés mécaniques après durcissement d'une composition de silicone bicomposante selon l'une quelconque des revendications 1 à 12, **caractérisé en ce que** le rapport de mélange du composant A au composant B en poids est choisi de manière quelconque dans une plage allant de 1:1 à 25:1, en particulier de 5:1 à 20:1, de préférence de 7:1 à 16:1.
